# EUROPÄISCHE PATENTSCHRIFT

(11) **EP 1 753 831 B1**
(45) Veröffentlichungstag und Bekanntmachung des Hinweises auf die Patenterteilung: **17.12.2008**
(21) Anmeldenummer: 05731084.9
(22) Anmeldetag: 06.04.2005
(51) Int. Cl.: C09D 7/12, C09D 5/00, B01J 35/00, C08K 3/22

(54) **BESCHICHTUNGSZUSAMMENSETZUNG**
COATING COMPOSITION
COMPOSITION DE REVETEMENT

(30) Priorität: 04.06.2004 DE 102004027379
(43) Veröffentlichungstag der Anmeldung: 21.02.2007
(60) Teilanmeldung: 07018208.4
(73) Patentinhaber: STO AG, D-79780 Stühlingen (DE)
(72) Erfinder: GROCHAL, Peter, 79761 Waldshut (DE); DUTTLINGER, Werner, 79848 Bonndorf (DE); TROLL, Michael, 79848 Bonndorf-Dillendorf (DE); ERMUTH, Josef, 65205 Wiesbaden (DE)
(74) Vertreter: Leinweber & Zimmermann
(86) Internationale Anmeldenummer: PCT/EP2005/003622
(87) Internationale Veröffentlichungsnummer: WO 2005/118726

(56) Entgegenhaltungen:
- EP-A- 0 963 789
- EP-A- 1 285 953
- ASAHI R ET AL: "Visible-light photocatalysis in nitrogen-doped titanium oxides" SCIENCE, AMERICAN ASSOCIATION FOR THE ADVANCEMENT OF SCIENCE,, US, Bd. 293, 13. Juli 2001 (2001-07-13), Seiten 269-271, XP002254522 ISSN: 0036-8075

## Beschreibung

Die Erfindung betrifft eine Zusammensetzung zum Beschichten von Wänden, Fassaden od. dgl..

Derartige Zusammensetzungen werden beispielsweise zum Herstellen von Farben und Putzsystemen für den Innen- und Außenbereich eingesetzt. Ein besonderes Einsatzgebiet derartiger Zusammensetzungen ist die Herstellung von Wärmedämmverbundsystemen. Dabei können diese Zusammensetzungen im besonderen für die Herstellung einer Abschlußbeschichtung für Wärmedämmverbundsysteme eingesetzt werden. Dabei tritt nach Fertigstellung entsprechender Wärmedämmverbundsysteme, im besonderen auf der Nordseite von Gebäuden, in einigen Fällen ein Algen- und Pilzbefall der Abschlußbeschichtung auf.

Gemäß der EP 0 963 789 A2 kann eine verbesserte Witterungsbeständigkeit und Haltbarkeit einer einen Photokatalysator enthaltenden Beschichtungszusammensetzung erreicht werden, wenn als Photokatalysator ein mit Calciumphosphat beschichtetes Titandioxid eingesetzt wird.

In der EP 1 285 953 A1 wird ein bei Bestrahlen mit sichbarem Licht photokatalytisch wirksames Material vorgeschlagen, das Titandioxid mit einer besonderen Fehlstellenstruktur aufweist.

Gemäß Asahi R. et al.: "Visible-light photocatalysis in nitrogen-doped titanium oxides", Science, American Association for the Advancement of Science, US, Bd. 293, Seiten 269 - 271, XP002254522, ISSN: 0036-8075 kann mit Hilfe von N-dotierem TiO₂ ein photokatalytischer Effekt bei Bestrahlung mit sichtbarem Licht erzielt werden.

Angesichts dieser Probleme im Stand der Technik liegt der Erfindung die Aufgabe zugrunde, eine Zusammensetzung der eingangs beschriebenen Art bereitzustellen, mit der das Algen- und Pilzwachstum wirksam gehemmt werden kann, und ein Verfahren zur Herstellung derartiger Zusammensetzungen anzugeben.

Erfindungsgemäß wird diese Aufgabe durch die im kennzeichnenden Teil des Patentanspruchs 1 angegebene Weiterbildung der bekannten Zu-sammensetzungen gelöst.

Diese Erfindung geht auf die Erkenntnis zurück, daß photokatalytisch wirksame Mittel nicht nur zum Schadstoffabbau, wie in der DE 100 64 317 A1 angegeben, sondern auch zur Hemmung des Zellwachstums von Algen und Pilzen eingesetzt werden können. Dabei wird durch die besondere Beschaffenheit der erfindungsgemäß eingesetzten photokatalytisch wirksamen Mittel die Ausnutzung von normalem Sonnenlicht, welches in Innenräumen und auch auf der Nordseite von Gebäuden durch Reflexion und Streuung auftrifft, ermöglicht, wobei gleichzeitig durch Einsatz der Bindemittel mit den beschriebenen Eigenschaften das Auftreten der Photokatalyse an den photokatalytisch wirksamen Mitteln sichergestellt wird. Insgesamt läßt sich so auch ohne Einsatz herkömmlicherweise zur Hemmung von Pilz- und Algenwachstum verwendeter Biozide das Algen- und Pilzwachstum wirkungsvoll reduzieren.

Bei einer im Rahmen der Erfindung besonders bevorzugten Zusammensetzung ist das Verhältnis der Absorbanz (Kubelka-Munk-Funktion F(R_{∞})) des photokatalytisch wirksamen Mittels zur Absorbanz (Kubelka-Munk-Funktion F(R_{∞})) des Bindemittels bei mindestens einer Absorptionswellenlänge im Bereich zwischen 380 und 500 nm größer als 6,25 x 10⁻³, vorzugsweise größer als 1 x 10⁻². Dabei kann das Bindemittel bei mindestens einer Absorptionswellenlänge im Bereich zwischen 380 und 500 nm, insbesondere im Bereich zwischen 400 und 450 nm, eine Absorbanz von weniger als 0,8, insbesondere weniger als 0,5 aufweisen, wenn das photokatalytisch wirksame Mittel unter gleichen Meßbedingungen bei der Absorptionswellenlänge eine Absorbanz von mehr als 0,005, insbesondere mehr als 0,01, besonders bevorzugt 0,02 oder mehr aufweist.

Im Rahmen der Erfindung eingesetzte Bindemittel können organische und/oder anorganische Bestandteile aufweisen. Der Einsatz von Bindemitteln, die ggf. ausschließlich anorganische Bestandteile aufweisen, hat sich im Hinblick auf die Vermeidung einer photokatalytisch induzierten Zersetzung des Bindemittels als zweckmäßig erwiesen.

Bei einer besonders bevorzugten Ausführungsform der Erfindung kann das Bindemittel mindestens einen organischen Bestandteil und mindestens einen anorganischen Bestandteil aufweisen. Durch geschickte Auswahl des Bindemittels kann sichergestellt werden, daß durch die photokatalytischen Mittel erzeugte Radikale nicht zur Zersetzung des Bindemittels und einer entsprechenden Kreidung der Wand- bzw. Fassadenbeschichtung führt. Erfindungsgemäß weist das photokatalytisch wirksame Mittel TiO₂ auf. Bei Halbleitern entsteht die photokatalytische Wirkung dadurch, daß bei Lichteinfall Elektron-Loch-Paare entstehen, welche an der Materialoberfläche hochreaktive freie Radikale erzeugen, die zur Hemmung des Zellwachstums beitragen können. Titandioxid ist ein derartiger Halbleiter. Unter Verwendung von Titandioxid läßt sich eine photokatalytische Wirkung im Wellenlängenbereich zwischen 400 und 450 nm erreichen, wenn eine Versetzung, insbesondere Dotierung mit Kohlenstoff und/oder schufel erfolgt.

Dabei hat es sich als besonders günstig im Hinblick auf die gewünschte photokatalytische Wirkung im Wellenlängenbereich zwischen 400 nm und 450 nm erwiesen, wenn der Schwefel- und/oder Kohlenstoffgehalt des als photokatalytisch wirksames Mittel eingesetzten Titandioxids 0,05 bis 4 Gew.-%, bevorzugt 0,05 bis 2 Gew.-%, besonders bevorzugt 0,4 bis 1,5 Gew.-% beträgt. Es hat sich gezeigt, daß der gewünschte Effekt besonders deutlich hervortritt, wenn das mit Schwefel und/oder Kohlenstoff versetzte Titandioxid in einer Anatas-Phase vorliegt. Ferner hat es sich als vorteilhaft erwiesen, wenn der Schwefel und/oder Kohlenstoff nur in einer Oberflächenschicht der Titandioxidteilchen der erfindungsgemäßen Zusammensetzung eingelagert ist.

Das photokatalytisch wirksame Mittel entfaltet eine besonders gute Wirkung, wenn es eine spezifische Oberfläche nach BET von 100 bis 250 m²/g, bevorzugt 130 bis 170 m²/g aufweist und/oder weder im Röntgen-Photoelektronenspektrum noch im Infrarotspektrum Carbonatbanden zeigt. Im Hinblick auf eine besonders hohe Absorbanz des photokatalytisch wirksamen Mittels im Bereich zwischen 400 und 450 nm hat es sich als günstig erwiesen, wenn das photokatalytisch wirksame Mittel zumindest teilweise hergestellt ist durch Vermischen einer vorzugsweise in einem Lösungsmittel gelösten titanhaltigen Verbindung mit einer organischen Kohlenstoffverbindung und thermisches Behandeln dieser Mischung bei einer Temperatur von 500°C oder weniger, vorzugsweise 400°C oder weniger, besonders bevorzugt 350°C oder weniger und mehr als 150°C, insbesondere 200°C oder mehr.

Das so erhaltene photokatalytisch wirksame Mittel kann eine besonders starke Absorptionsbande bei einer Bindungsenergie von 285,6 eV im Röntgen-Photoelektronenspektrum (XPS), bezogen auf die Ols-Bande bei 530 eV, aufweisen.

Zum Erhalt einer das Zellwachstum besonders wirkungsvoll unterdrückenden Zusammensetzung hat es sich als zweckmäßig erwiesen, wenn zur Herstellung der photokatalytisch wirksamen Verbindung ein amorphes, teilkristallines oder kristallines Titanoxid bzw. wasserhaltiges Titanoxid oder ein Titanhydrat oder ein Titanoxihydrat verwendet wird, wobei die titanhaltige Verbindung ein Titanhydrat aus einem Sulfatprozeß sein kann. Das Titanhydrat kann zuvor neutralisiert und gewaschen werden, so daß der SO₃-Gehalt des Feststoffes nach Trocknung weniger als 1 Gew.-% beträgt. Die zur Herstellung des in der erfindungsgemäßen Zusammensetzung eingesetzten photokatalytisch wirksamen Mittels verwendete Kohlenstoffverbindung weist zweckmäßigerweise eine Zersetzungstemperatur von höchstens 400°C, besonders bevorzugt 350°C oder weniger, insbesondere 300°C oder weniger auf. Dabei kann die Kohlenstoffverbindung mindestens eine funktionelle Gruppe, wie etwa eine OH-, CHO-, COOH-, NHₓ- und/oder SHₓ-Gruppe, enthalten. Als besonders zweckmäßig hat sich die Verwendung von Ethylenglykol, Glyzerin, Kohlehydraten, Ammoniumhydroxyden oder Mischungen davon erwiesen. Zusätzlich oder alternativ kann Ruß oder Aktivkohle als Kohlenstoffverbindung eingesetzt werden. Bei der Herstellung der in einer erfindungsgemäßen Zusammensetzung einzusetzenden photokatalytisch wirksamen Mittel kann die thermische Behandlung in einem kontinuierlich zu betreibenden Calzinieraggregat, bevorzugt einem Drehrohrofen, erfolgen, wobei ein handelsüblich in Pulver- oder Schlammform erhältliches Titandioxid zur Herstellung einer Suspension in einem Lösungsmittel eingesetzt wird, dieser Suspension eine geringe Menge der Schwefel-Kohlenstoffverbindung zugesetzt und mit der Suspension vermischt wird, das Lösungsmittel entfernt, der Rückstand bei einer Trocknungstemperatur getrocknet und anschließend bei einer Calzinierungstemperatur calziniert wird. Als Lösungsmittel kann beispielsweise Wasser eingesetzt werden.

Im Hinblick auf den Erhalt einer besonders großen photokatalytischen Wirkung hat es sich als zweckmäßig erwiesen, wenn der getrocknete Rückstand in einem geschlossenen Gefäß innerhalb einer Stunde auf 300°C erhitzt und daraufhin drei weitere Stunden auf dieser Temperatur gehalten wird. Die Calzinierung des pulvrigen Rückstandes durch Erhitzen erfolgt zweckmäßigerweise solange, bis nach einem Farbwechsel von Weiß auf Dunkelbraun ein weiterer Farbwechsel auf Beige stattfindet.

Eine erfindungsgemäße Zusammensetzung kann neben dem mindestens einen Bindemittel und die photokatalytisch wirksamen Mittel auch noch ein Dispergiermittel, wie etwa Natriumpolyphosphat und/oder eine Lösung von Polyacrylat, Natriumsalz, mindestens ein Verdickungsmittel, wie etwa modifizierte Methylhydroxyethylcellulose, hydrophobes Polyurethan, Celluloseether und/oder ein Polysacharid, einen Entschäumer, wie etwa ein Gemisch aus Paraffinöl, hydrophober Kieselsäure und Emulgatoren und/oder Polysiloxancopolymer mit hydrophober Kieselsäure, emulgiert in Wasser, mindestens ein Pigment, wie etwa Titandioxid, mindestens einen Füllstoff, wie etwa ein Silikat, Kaolin oder dgl., mindestens ein Hydrophobierungsmittel, wie etwa Kaliummethylsilikonat in wäßriger Lösung und/oder mindestens ein Mikrobiozid bzw. Topfkonservierer, wie etwa Isothiazolinon, aufweisen. Die mit einer erfindungsgemäßen Zusammensetzung erhaltene Beschichtung kann eine Strukturierung mit einer Korngröße von bis zu 6 mm aufweisen. Zusätzlich oder alternativ können erfindungsgemäße Zusammensetzungen auch noch Adsorptionsmittel, wie etwa Aktivkohle, Kieselsäure und Mikrosilika umfassen. In diesem Fall können die auf dem Adsorptionsmittel adsorbierten Substanzen unter Einsatz des photokatalytisch wirksamen Mittels der Zusammensetzung wirkungsvoll zersetzt werden.

Als besonders günstig hat es sich erwiesen, wenn die erfindungsgemäße Zusammensetzung eine oberkritische Zusammensetzung ist, bei der der Feststoffanteil so auf den flüssigen Anteil bzw. Bindemittelanteil abgestimmt ist, daß keine vollständige Benetzung der Feststoffe erfolgt. In diesem Fall wird eine poröse Beschichtung gebildet, mit der ein zuverlässiger Kontakt zwischen zu beseitigenden schädlichen Substanzen und dem photokatalytisch wirksamen Mittel sichergestellt werden kann.

Bevorzugt beinhaltet die erfindungsgemäße Zusammensetzung ein Adsorptionsmittel, wie etwa Aktivkohle, Kieselsäure, Mikrosilika, Silikagele, Zeolithe, Bentonite, Diatomenerde, geschäumtes Glas oder dgl.

Es hat sich gezeigt, daß erfindungsgemäß eingesetzte photokatalytisch wirksame Mittel, auf Basis von schwefel- und/oder kohlenstoffhaltigem Titandioxid mit einer gegenüber reinem Titandioxid signifikant erhöhten Lichtabsorption im Wellenlängenbereich oberhalb von 400 nm (vlp-TiO₂) ein Elektronspinresonanz-Spektrum aufweisen, das, gemessen bei einer Temperatur von 5 K, nur ein signifikantes Signal im g-Wertbereich von 1,97 bis 2,05 aufweist.

Im Rahmen der Herstellung erfindungsgemäßer Zusammensetzungen hat es sich als besonders günstig erwiesen, wenn in einem ersten Schritt ein Zwischenprodukt durch Dispergieren des photokatalytisch wirksamen Mittels in einem anorganischen Bindemittel erzeugt und dieses Zwischenprodukt in einem zweiten Schritt mit einem organischen Bindemittel vermischt wird. Bei diesem Verfahren werden in dem ersten Schritt Koagulate aus dem photokatalytisch wirksamen Mittel und dem gegenüber den mit dem photokatalytisch wirksamen Mittel erzeugbaren Radikalen im allgemeinen inerten anorganischen Bindemittel erzeugt, wobei diese Koagulate in dem zweiten Schritt über das organische Bindemittel miteinander verbunden werden können. Bevorzugte Ausführungsformen der Erfindung sind in den folgenden Tabellen angegeben, wobei sich die Zahlenangaben auf Gewichtsanteile der jeweiligen Bestandteile der Zusammensetzungen beziehen.

### Beispiel 1 Silikonharzfarbe für Innen

| | | |
|---|---|---|
| Wasser | - | 35,7 |
| Isothiazolinone | Mikrobiozid | 0,4 |
| Salze von Polyacrylsäure bzw. phosphatischen Estern und Tetrakaliumpyrophosphat | Dispergiermittel | 0,9 |
| Mineralöl | Entschäumer | 0,4 |
| Celluloseverdicker | Verdickungsmittel | 0,6 |
| Polysiloxan | Hydrophobierung | 1,0 |
| Siliconharzemulsion | Bindemittel | 4,0 |
| Titandioxid | Weißpigment | 13,0 |
| Photokatalytisches Titandioxid | Pigment | 10,0 |
| Silikate | Füllstoff | 10,0 |
| Kaolin | Füllstoff | 9,0 |
| Styrol/Acrylat | Bindemittel | 15,0 |

### Beispiel 2 Silikatfarbe für Innen

| | | |
|---|---|---|
| Wasser | - | 26,6 |
| Celluloseether und Polysaccharide | Verdickungsmittel | 0,4 |
| Tetraalkyl-alkylendiamin | Stabilisator für Wasserglas | 0,2 |
| Polyacrylat mit Natriumsalz | Dispergiermittel | 0,1 |
| Kaliumwasserglas | Bindemittel | 14,0 |
| Kaliummethylsiliconat | Hydrophobierung | 1,0 |
| Photokatalytisches Titandioxid | Pigment | 10,0 |
| Titandioxid | Weißpigment | 22,0 |
| Kaolin | Füllstoff | 10,0 |
| Silikate | Füllstoff | 7,0 |
| Polysiloxancopolymer | Entschäumer | 0,2 |
| Styrol/Acrylat | Bindemittel | 8,5 |

### Beispiel 3 Silikat-/Silikonfarbe für Innen

| | | |
|---|---|---|
| Wasser | - | 26,5 |
| Celluloseether und Polysaccharide | Verdickungsmittel | 0,4 |
| Tetraalkyl-alkylendiamin | Stabilisator für Wasserglas | 0,2 |
| Polyacrylat mit Natriumsalz | Dispergiermittel | 0,1 |
| Siliconharzemulsion | Bindemittel | 4,3 |
| Kaliumwasserglas | Bindemittel | 14,0 |
| Kaliummethylsiliconat | Hydrophobierung | 1,0 |
| Photokatalytisches Titandioxid | Pigment | 10,0 |
| Titandioxid | Weißpigment | 22,0 |
| Kaolin | Füllstoff | 10,0 |
| Silikate | Füllstoff | 7,0 |
| Polysiloxancopolymer | Entschäumer | 0,2 |
| Styrol/Acrylat | Bindemittel | 4,3 |

### Beispiel 4 Silikonputz für Innen

| | | |
|---|---|---|
| Wasser | - | 13,8 |
| Polysaccharid und Cellulose | Verdickungsmittel | 0,5 |
| Salz von Polyacrylsäure | Dispergiermittel | 0,1 |
| Siliconharzemulsion | Bindemittel | 3,0 |
| Titandioxid | Weißpigment | 0,8 |
| Photokatalytisches Titandioxid | Pigment | 10,0 |
| Vinylacetat-Ethylen Copolymerisat | Bindemittel | 3,0 |
| Silikate | Füllstoff | 1,4 |
| Calciumcarbonat | Füllstoff | 25,9 |
| Kieselgur | Füllstoff | 2,9 |
| Isothiazolinon | Mikrobiozid | 0,2 |
| Wachs-Dispersion | Hydrophobierung | 0,4 |
| Calciumcarbonat | Struktursand | 38,0 |

### Beispiel 5 Silikatputz für Innen

| | | |
|---|---|---|
| Wasser | - | 24,5 |
| Celluloseether | Verdickungsmittel | 0,2 |
| Kaliumhydroxid | pH-Regulator | 0,1 |
| Kieselsäure | Entschäumer | 0,1 |
| Natriumsalz | Dispergiermittel | 0,4 |
| Calciumhydroxid | Bindemittel | 8,0 |
| Photokatalytisches Titandioxid | Pigment | 10,0 |
| Titandioxid | Weißpigment | 3,0 |
| Cellulose | Füllstoff | 1,0 |
| Ethylen-Vinylester-Terpolymer | Bindemittel | 2,9 |
| Leinöl-Standöl | Bindemittel | 0,4 |
| Siliciumdioxid | Füllstoff | 9,4 |
| Calciumcarbonat | Struktursand | 40,0 |

### Beispiel 6 Silikonharzfarbe für Außen

| | | |
|---|---|---|
| Wasser | - | 31,0 |
| Salze von Polyacrylsäure und Natriumpolyphosphat | Dispergiermittel | 0,4 |
| Isothiazolinone | Mikrobiozid | 1,2 |
| Cellulose | Verdickungsmittel | 0,3 |
| Siloxane | Entschäumer | 0,3 |
| Dicarbonsäure-Ester | Filmbildehilfsmittel | 1,0 |
| Siliconharzemulsion | Bindemittel | 9,3 |
| Photokatalytisches Titandioxid | Pigment | 5,0 |
| Titandioxid | Weißpigment | 12,0 |
| Calciumcarbonat | Füllstoff | 17,7 |
| Magnesium-Aluminium-Silikat | Füllstoff | 12,0 |
| Natronlauge | pH-Regulator | 0,1 |
| Styrol/Acrylat | Bindemittel | 9,5 |
| Polyurethan | Verdickungsmittel | 0,2 |

### Beispiel 7 Silikatfarbe für Außen

| | | |
|---|---|---|
| Wasser | - | 18,0 |
| Celluloseether, Saccharide und Acrylate | Verdickungsmittel | 0,7 |
| Tetraalkyl-alkylendiamin | Stabilisator für Wasserglas | 0,3 |
| Polycarboxylsäure und Ammonioderivat | Dispergiermittel | 0,2 |
| Kaliummethylsilikonat und Polysiloxan | Hydrophobierung | 1,0 |
| Kaliumwasserglas | Bindemittel | 20,0 |
| Photokatalytisches Titandioxid | Pigment | 5,0 |
| Titandioxid | Weißpigment | 12,0 |
| Kaolin | Füllstoff | 1,0 |
| Kieselgur, Silikate und Siliziumdioxid | Füllstoff | 12,0 |
| Bariumsulfat | Füllstoff | 20,0 |
| Lösungsmittel | Filmbildehilfsmittel | 0,6 |
| Styrol/Acrylat | Bindemittel | 9,0 |
| Siloxane | Entschäumer | 0,2 |

### Beispiel 8 Silikat-/Silikonfarbe für Außen

| | | |
|---|---|---|
| Wasser | - | 18,0 |
| Celluloseether, Saccharide und Acrylate | Verdickungsmittel | 0,7 |
| Tetraalkyl-alkylendiamin | Stabilisator für Wasserglas | 0,3 |
| Polycarboxylsäure und Ammonioderivat | Dispergiermittel | 0,2 |
| Siliconharzemulsion | Bindemittel | 5,0 |
| Kaliummethylsilikonat und Polysiloxan | Hydrophobierung | 1,0 |
| Kaliumwasserglas | Bindemittel | 20,0 |
| Photokatalytisches Titandioxid | Pigment | 5,0 |
| Titandioxid | Weißpigment | 12,0 |
| Kaolin | Füllstoff | 1,0 |
| Kieselgur, Silikate und Siliziumdioxid | Füllstoff | 12,0 |
| Bariumsulfat | Füllstoff | 20,0 |
| Lösungsmittel | Filmbildehilfsmittel | 0,6 |
| Styrol/Acrylat | Bindemittel | 4,0 |
| Siloxane | Entschäumer | 0,2 |

### Beispiel 9 Silikon putz für Außen

| | | |
|---|---|---|
| Wasser | - | 11,8 |
| Isothiazolinone | Mikrobiozid | 0,8 |
| Saccharid | Verdickungsmittel | 0,1 |
| Natriumsalz | Dispergiermittel | 0,1 |
| Siliconharzemulsion | Bindemittel | 2,0 |
| Photokatalytisches Titandioxid | Pigment | 5,0 |
| Titandioxid | Weißpigment | 1,6 |
| Kieselgur, Silikate und Siliziumdioxid | Füllstoff | 3,8 |
| Aluminiumhydroxid | Füllstoff | 8,8 |
| Cellulose | Füllstoff | 0,7 |
| Calciumcarbonat | Füllstoff | 10,6 |
| Lösungsmittel | Filmbildehilfsmittel | 0,8 |
| Styrol/Acrylat | Bindemittel | 6,0 |
| Ethylen-Vinylester-Terpolymer | Bindemittel | 5,5 |
| Tetrakaliumpyrophosat | Dispergiermittel | 0,3 |
| Mineralöl | Entschäumer | 0,1 |
| Calciumcarbonat | Struktursand | 42,0 |

### Beispiel 10 Silikatputz für Außen

| | | |
|---|---|---|
| Wasser | - | 7,2 |
| Polysaccharid | Verdickungsmittel | 0,1 |
| Tetraalkyl-alkylendiamin | Stabilisator für Wasserglas | 0,3 |
| Kaliumwasserglas | Bindemittel | 4,1 |
| Kaliummethylsilikonat | Hydrophobierung | 0,3 |
| Photokatalytisches Titandioxid | Pigment | 5,0 |
| Titandioxid | Weißpigment | 1,8 |
| Kieselgur und Silikate | Füllstoff | 2,8 |
| Calciumcarbonat | Füllstoff | 32,0 |
| Polyacrylnitril | Füllstoff | 0,3 |
| Mineralfaser | Füllstoff | 0,5 |
| Styrol/Acrylat | Bindemittel | 8,3 |
| Lösungsmittel | Filmbildehilfsmittel | 0,2 |
| Isothiazolinone | Mikrobiozid | 0,3 |
| Fettalkoholsuspension | Trocknungsverzögerer | 0,5 |
| Kieselsäure | Mattierungsmittel | 1,3 |
| Calciumcarbonat | Struktursand | 35,0 |

### Beispiel 11 Dispersionslack für Außen

| | | |
|---|---|---|
| Wasser | - | 14,0 |
| Anionische Salze | Dispergiermittel | 0,2 |
| Mineralöl | Entschäumer | 0,3 |
| Lösemittel | Filmbildehilfsmittel | 5,0 |
| Photokatalytisches Titandioxid | Pigment | 5,0 |
| Titandioxid | Weißpigment | 20,0 |
| Silikate | Füllstoff | 3,0 |
| Reinacrylat | Bindemittel | 50,0 |
| Kaliumhydroxid | pH-Regulator | 0,2 |
| Acrylsäure | Verdickungsmittel | 2,0 |
| Isothiazolinone | Mikrobiozid | 0,3 |

### Beispiel 12 Betonlasur für Außen

| | | |
|---|---|---|
| Wasser | - | 23,0 |
| Anionische Salze | Dispergiermittel | 0,5 |
| Celluloseeteher | Verdickungsmittel | 0,2 |
| Mineralöl | Entschäumer | 0,3 |
| Photokatalytisches Titandioxid | Pigment | 5,0 |
| Titandioxid | Weißpigment | 1,5 |
| Kieselgur | Füllstoff | 2,0 |
| Calciumcarbonat | Füllstoff | 27,0 |
| Lösemittel | Filmbildehilfsmittel | 4,0 |
| Styrol/Acrylat | Bindemittel | 35,0 |
| Acrylsäure | Verdickungsmittel | 1,0 |
| Isothiazolinone | Mikrobiozid | 0,5 |

### Beispiel 13 Kalkputz für Außen

| | | |
|---|---|---|
| Wasser | - | 23,50 |
| Celluloseether | Verdickungsmittel | 0,20 |
| Kalilauge | pH-Regulator | 0,10 |
| Mineralöl | Entschäumer | 0,10 |
| Salz von Polyacrylsäure | Dispergiermittel | 0,40 |
| Cellulosefaser | Füllstoff | 1,00 |
| Titandioxid | Weißpigment | 3,00 |
| Calciumhydroxid (Kalk) | Bindemittel | 8,00 |
| Vinylchlorid- Ethylen- Vinylester | Bindemittel | 2,90 |
| Photokatalytisches Titandioxid | Pigment | 5,00 |
| Leinöl-Standöl | Bindemittel | 0,40 |
| Silikate | Füllstoff | 2,00 |
| Quarzsand | Füllstoff | 13,40 |
| Calciumcarbonat | Struktursand | 40,00 |

### Beispiel 14 Kalkputz für Innen

| | | |
|---|---|---|
| Wasser | - | 23,5 |
| Celluloseether | Verdickungsmittel | 0,2 |
| Kalilauge | pH-Regulator | 0,1 |
| Mineralöl | Entschäumer | 0,1 |
| Salz von Polyacrylsäure | Dispergiermittel | 0,4 |
| Cellulosefaser | Füllstoff | 1,0 |
| Titandioxid | Weißpigment | 3,0 |
| Calciumhydroxid (Kalk) | Bindemittel | 8,0 |
| Vinylchlorid- Ethylen- Vinylester | Bindemittel | 2,9 |
| Photokatalytisches Titandioxid | Pigment | 10,0 |
| Leinöl-Standöl | Bindemittel | 0,4 |
| Silikate | Füllstoff | 2,0 |
| Quarzsand | Füllstoff | 13,4 |
| Calciumcarbonat | Struktursand | 35,0 |

### Beispiel 15 Zementputz für Außen

| | | |
|---|---|---|
| Marmormehl | Füllstoff | 24,0 |
| Calciumcarbonat | Struktursand | 33,0 |
| Calciumcarbonat | Füllstoff | 4,0 |
| Quarzsand | Füllstoff | 12,0 |
| Faser | Füllstoff | 0,5 |
| Cellulose - Ether | Verdickungsmittel | 0,3 |
| Silikate | Füllstoff | 0,5 |
| Calciumsulfat | Füllstoff | 0,2 |
| Photokatalytisches Titandioxid | Pigment | 5,0 |
| Oleat | Hydrophobierung | 0,3 |
| Weißzement | Bindemittel | 13,2 |
| Calciumhydroxid | Bindemittel | 7,0 |

### Beispiel 16 Zementputz für Innen

| | | |
|---|---|---|
| Marmormehl | Füllstoff | 24,0 |
| Calciumcarbonat | Struktursand | 28,0 |
| Calciumcarbonat | Füllstoff | 4,0 |
| Quarzsand | Füllstoff | 12,0 |
| Faser | Füllstoff | 0,5 |
| Cellulose - Ether | Verdickungsmittel | 0,3 |
| Silikate | Füllstoff | 0,5 |
| Calciumsulfat | Füllstoff | 0,2 |
| Photokatalytisches Titandioxid | Pigment | 10,0 |
| Oleat | Hydrophobierung | 0,3 |
| Weißzement | Bindemittel | 13,2 |
| Calciumhydroxid | Bindemittel | 7,0 |

### Beispiel 17 Gipsputz für Innen

| | | |
|---|---|---|
| Gips (Calciumsulfat) | Bindemittel | 24,0 |
| Gesteinsmehl (z.B. Marmormehl) | Füllstoff | 29,6 |
| Cellulose - /Stärke - Ether | Verdickungsmittel | 0,3 |
| Photokatalytisches Titandioxid | Pigment | 10,0 |
| Calciumcarbonat | Struktursand | 35,0 |
| Styrol/Acrylat | Bindemittel | 1,0 |
| Weinsäure | Verzögerer | 0,1 |

### Beispiel 18 Gips-/Kalkputz für Innen

| | | |
|---|---|---|
| Gips (Calciumsulfat) | Bindemittel | 4,0 |
| Weisskalkhydrat | Bindemittel | 10,0 |
| Gesteinsmehl (z.B. Marmormehl) | Füllstoff | 28,7 |
| Cellulose - /Stärke - Ether | Verdickungsmittel | 0,7 |
| Photokatalytisches Titandioxid | Pigment | 10,0 |
| Calciumcarbonat | Struktursand | 45,0 |
| Styrol/Acrylat | Bindemittel | 1,5 |
| Weinsäure | Verzögerer | 0,1 |

Die erfindungsgemäße Zusammensetzung kann in allen Arten von Beschichtungen, wie z.B. Farben, Putzen, Lacken und Lasuren verwendet werden. Sie kann auf neuen und alten Bauuntergründen im Innen- und Außenbereich, wie z.B. Mauerwerk, Putzoberflächen, Anstrichen, Tapeten, Holz-, Metall-, Glas- und Keramikoberflächen, Wärmedämmverbundsystemen, vorgehängten Fassadenelementen und dgl., eingesetzt werden.

Nachstehend wird das bei der Herstellung erfindungsgemäßer Zusammensetzungen mit besonderem Vorteil einsetzbare photokatalytisch wirksame Mittel in Form eines vlp-TiO2 im einzelnen erläutert:

Das im Rahmen der Erfindung mit besonderem Vorteil einsetzbare vlp-TiO₂ zeigt eine höhere photokatalytische Wirksamkeit als die im Stand der Technik beschriebenen Typen. Als Maß der photokatalytischen Wirksamkeit (im folgenden als Photoaktivität" bezeichnet) dienet der Abbau von 4-Chlorphenol durch eine definierte Menge vlp-TiO₂ bei 120 minütiger Bestrahlung mit Licht der Wellenlänge ≥ 455 nm. Die Meßmethode ist unten im Detail beschrieben. Unter den genannten Meßbedingungen liegt die Photoaktivität des erfindungsgemäßen vlp-TiO₂ bei mindestens 20 %, bevorzugt bei mindestens 40 %, insbesondere bei mindestens 50 %.

Der Schwefel- und/oder Kohlenstoffgehalt liegt im Bereich von 0,05 bis 4 Gew.-% bezogen auf TiO₂, bevorzugt 0,05 bis 2,0 Gew.-% und besonders bevorzugt 0,3 bis 1,5 Gew.-%. Beste Ergebnisse werden bei Kohlenstoffgehalten von 0,4 bis 0,8 Gew.-% erzielt.

Die Titandioxidpartikel enthalten nur in einer Oberflächenschicht Kohlenstoff und werden deshalb im folgenden als "Kohlenstoff-modifiziert" bezeichnet - im Gegensatz zu dem volumendotierten, gemäß Sakthivel & Kisch (2003) hergestellten Titandioxid. Der Kohlenstoff bzw. die Kohlenstoffverbindungen des erfindungsgemäßen vlp-TiO₂ sind vermutlich in erster Linie kovalent über Sauerstoff auf der TiO₂-Oberfläche gebunden und alkalisch auslaugbar.

Der Photokatalysator kann zusätzlich Stickstoff und/oder Schwefel enthalten.

Das zur Herstellung erfindungsgemäßer Zusammensetzungen einsetzbare vlp-TiO₂ absorbiert im Gegensatz zu unmodifiziertem TiO₂ sichtbares Licht der Wellenlänge λ ≥ 400 nm. Dabei beträgt die der Absorbanz proportionale Kubelka-Munk-Funktion F(R_{∞}) bei 500 nm etwa 50 % und bei 600 nm etwa 20 % des Wertes bei 400 nm.

Das Elektronenspinresonanz-Spektrum (ESR) des erfindungsgemäß einsetzbaren vlp-TiO₂, gemessen bei einer Temperatur von 5 K, ist gekennzeichnet durch ein starkes Signal bei einem g-Wert von 2,002 bis 2,004, insbesondere 2,003. Im Bereich der g-Werte 1,97 bis 2.05 treten keine weiteren Signale auf. Die Intensität des Signals bei g etwa 2,003 verstärkt sich durch Bestrahlung mit Licht der Wellenlänge λ ≥ 380 nm (UV-freie 100 W Halogenlampe, Kaltlichtfilter KG5) gegenüber der Messung bei Dunkelheit.

Das Röntgen-Photoelektronenspektrum (XPS) des erfindungsgemäßen vlp-TiO₂ ist gekennzeichnet durch das Auftreten einer starken Absorptionsbande bei einer Bindungsenergie von 285,6 eV bezogen auf die Ols-Bande bei 530 eV.

Charakteristisch ist weiterhin, daß das vlp-TiO₂ im Gegensatz zu dem Photokatalysator nach Sakthivel & Kisch (2003) weder im Röntgen-Photoelektronenspektrum (XPS) noch im Infrarotspektrum Carbonatbanden zeigt.

Unter Bestrahlung mit sichtbarem Licht weist das vlp-TiO₂ einen Wasser-Kontaktwinkel von etwa 8° auf, unmodifiziertes TiO₂ zeigt dagegen einen Kontaktwinkel von etwa 21°.

Der erfindungsgemäß einsetzbare Photokatalysator ermöglicht einen Schadstoffabbau nicht nur mit artifiziellem sichtbarem Licht, sondern auch mit diffusem Tageslicht in Innenräumen. Er kann zum Abbau von Verunreinigungen in der Luft, die mit der erfindungsgemäßen Zusammensetzung in Kontakt gelangt, verwendet werden.

Der Photokatalysator kann in Beschichtungen für den Innen- und Außenbereich wie z.B. Farben, Putzen, Lacken und Lasuren für die Applikation auf Mauerwerk, Putzoberflächen, Anstrichen, Tapeten und Holz-, Metall-, Glas- oder Keramikoberflächen oder auf Bauteilen wie beispielsweise Wärmedämmverbundsystemen und vorgehängten Fassadenelementen Einsatz finden, sowie in Straßenbelägen und in Kunststoffen, Kunststoff-Folien, Fasern und Papier. Der Photokatalysator kann darüber hinaus bei der Produktion von Betonfertigteilen, Beton-Pflastersteinen, Dachziegeln, Keramik, Fliesen, Tapeten, Geweben, Paneelen und Verkleidungselementen für Decken und Wände im Innen- und Außenbereich verwendet werden.

Durch die lichtinduzierte Erhöhung der Hydrophilie der TiO₂-Oberfläche ergeben sich weitere Anwendungen in der Bauindustrie.

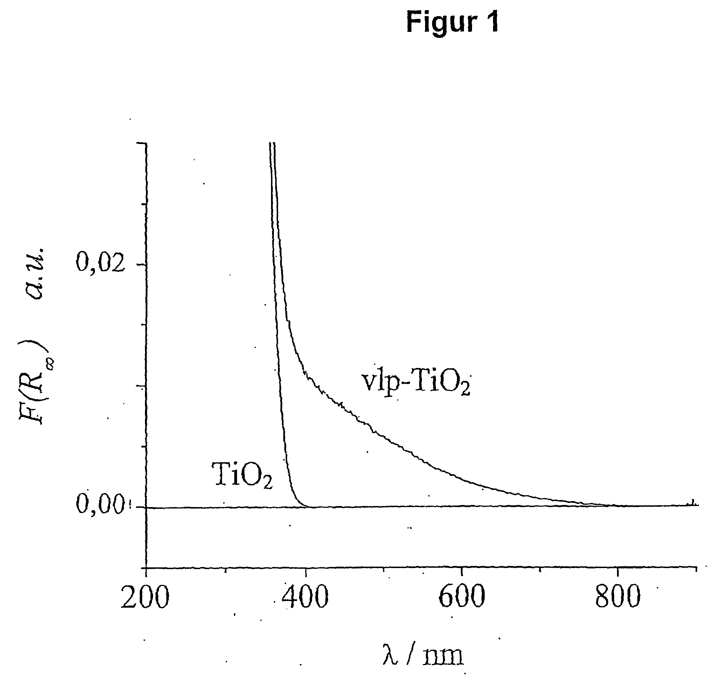

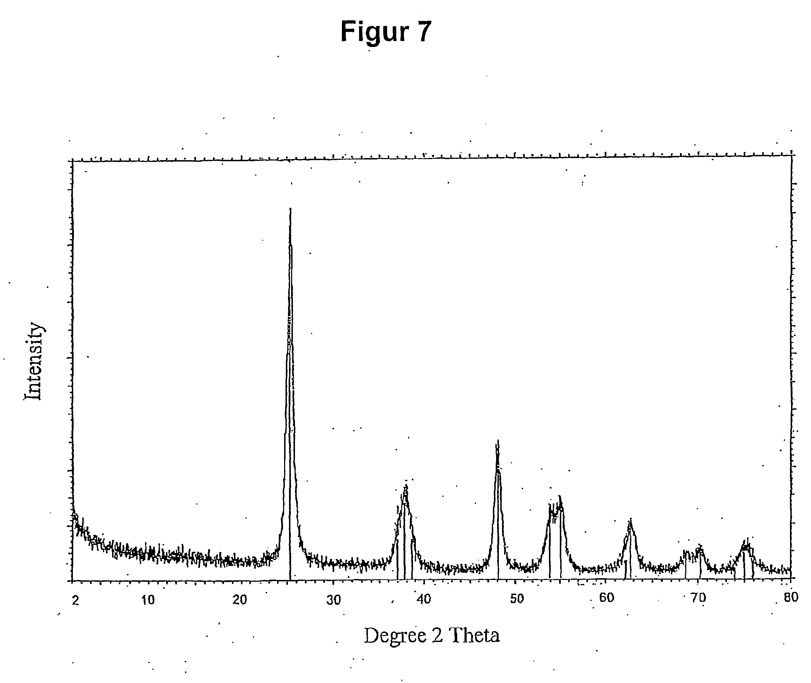

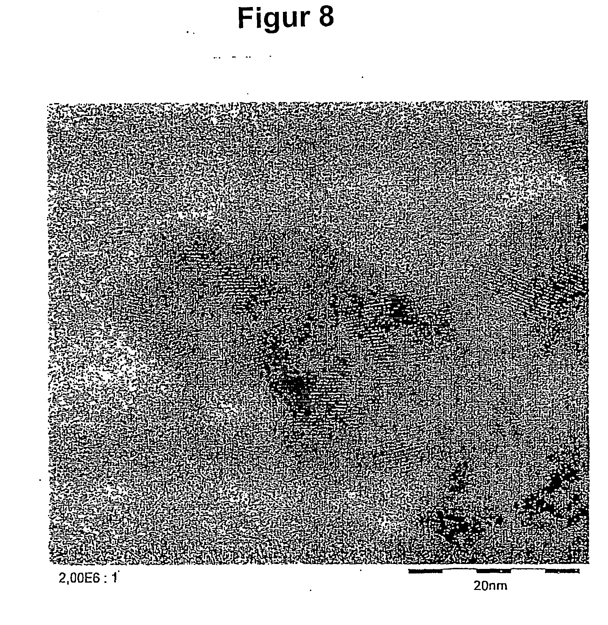

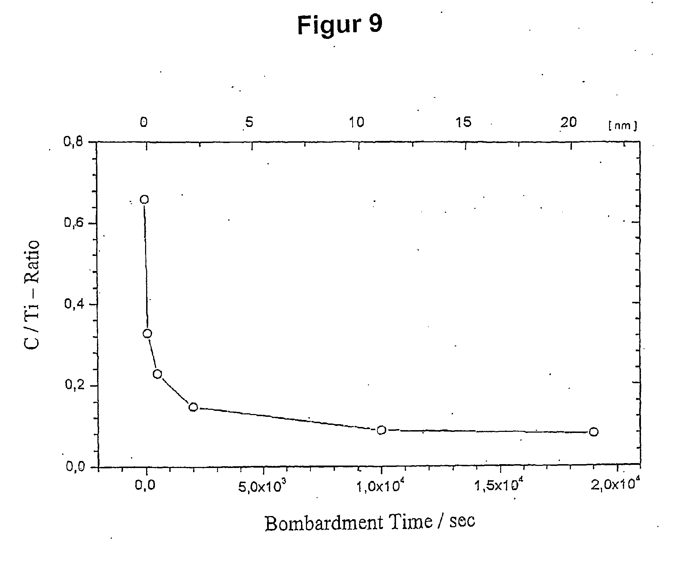

Die Erfindung wird nachstehend unter Bezugnahme auf die Figuren 1 bis 12 näher beschrieben:
**Figur 1** zeigt die der relativen Absorbanz proportionale Kubelka-Munk-Funktion F(R∞) (willkürliche Einheiten) für unmodifiziertes TiO₂ und für mit C modifiziertes TiO₂ (vlp-TiO₂) als Funktion der Wellenlänge und läßt erkennen, daß das vlp-TiO₂ im Unterschied zu unmodifiziertem Titandioxid im sichtbaren Spektralgebiet absorbiert. F(R∞) beträgt bei 500 nm etwa 50 % und 600 nm etwa 20 % des Wertes bei 400 nm.

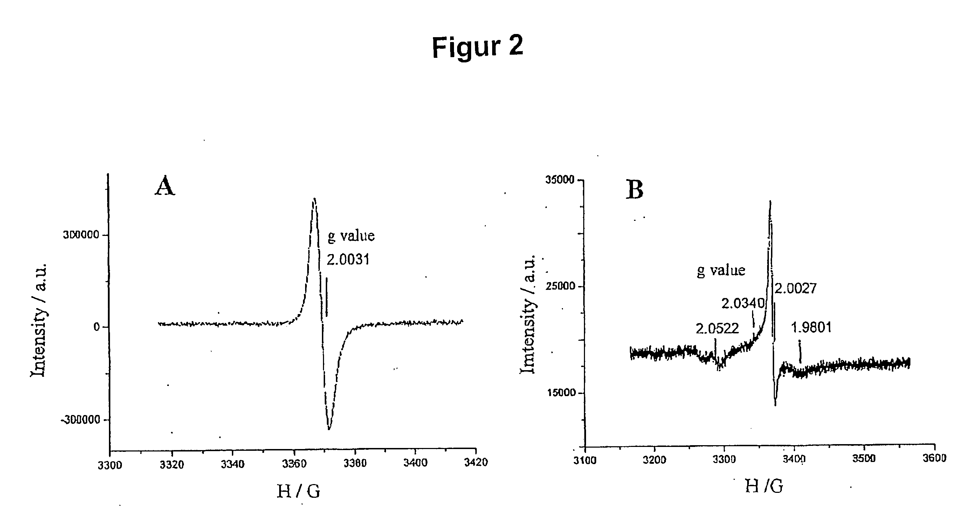

**Figur 2** zeigt die Elektronenresonanzspektren (ESR) des im Rahmen der Erfindung einsetzbaren vlp-TiO₂ (Spektrum A) und des nach Sakthivel & Kisch hergestellten TiO₂ (Spektrum B), aufgenommen bei Dunkelheit und einer Temperatur von 5 K. Spektrum A zeigt lediglich ein signifikantes Signal bei einem g-Wert von 2,003. Spektrum B zeigt zusätzlich zu einem Hauptsignal bei g etwa 2,003 drei weitere Signale im Bereich der g-Werte 1,97 bis 2,05.

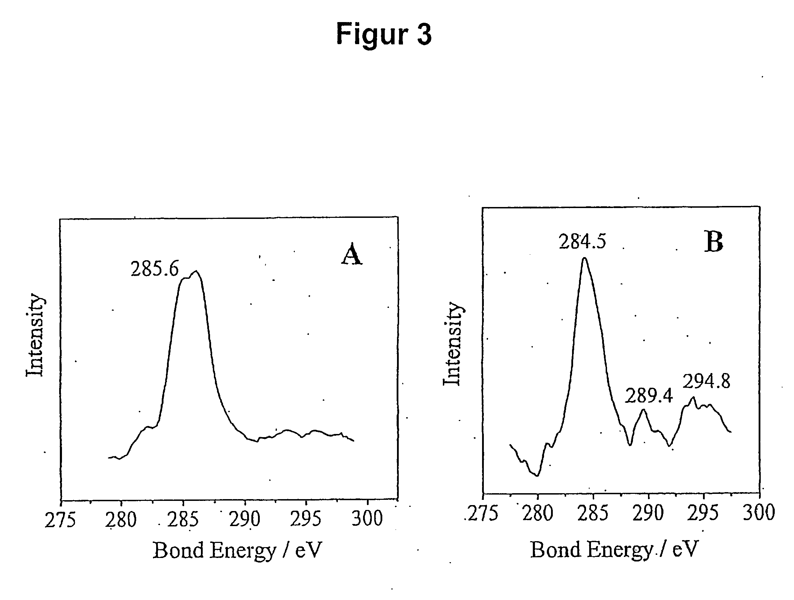

**Figur 3** enthält die Röntgen-Photoelektronenspektren (XPS) des erfindungsgemäßen vlp-TiO₂ (Spektrum A) und des schon bekannten, aus Titantetrachlorid mit Tetrabutylammoniumhydroxid ausgefällten TiO₂ nach Sakthivel & Kisch (Spektrum B). Das Spektrum des vlp-TiO₂ weist ein ausgeprägtes C1s-Signal bei einer Bindungsenergie von 285,6 eV bezogen auf die O1s-Absorptionsbande bei 530 eV auf, das auf elementaren Kohlenstoff hinweist. Spektrum B zeigt dagegen C1s-Signale für elementaren Kohlenstoff bei einer Bindungsenergie von 284,5 eV sowie zusätzlich Banden bei 289,4 eV und 294,8 eV, die auf Carbonat deuten. Auch entsprechende IR-Spektren weisen typische Carbonatbanden bei 1738, 1096 und 798 cm⁻¹ auf.

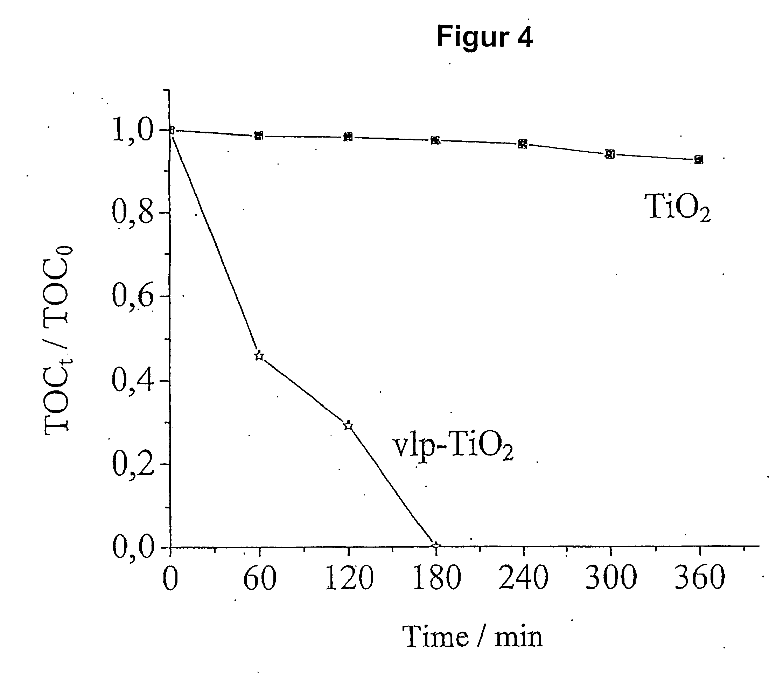

**Figur 4** illustriert die photokatalytische Wirksamkeit von vlp-TiO₂ gegenüber unmodifiziertem TiO₂ bei dem Abbau von 4-Chlorphenol (als 2,5 x 10⁻⁴ molare wäßrige Lösung) durch artifizielles sichtbares Licht (λ ≥ 455 nm). Dargestellt wird die Abnahme des Gesamtgehalts an organischem Kohlenstoff (TOCₜ) in der Lösung im Verhältnis zum Anfangswert (TOC₀). Mit dem vlp-TiO₂ erfolgt ein vollständiger Abbau nach drei Stunden.

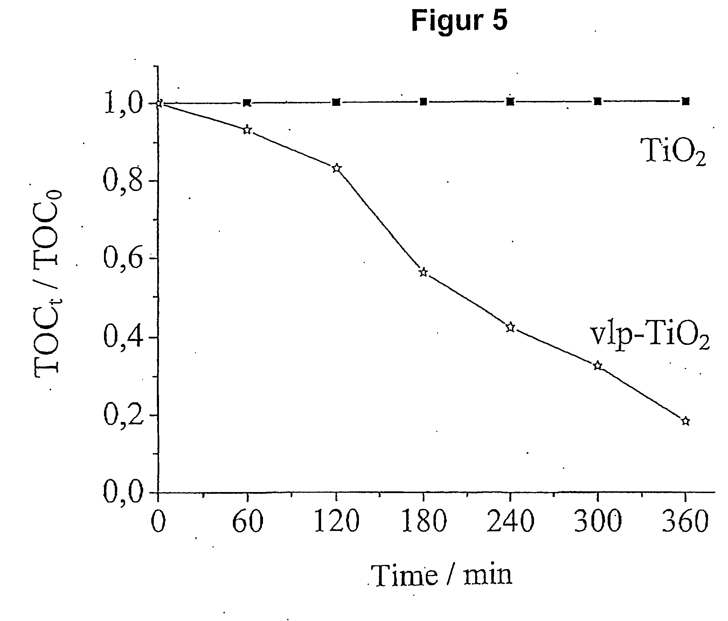

**Figur 5** illustriert die photokatalytische Wirksamkeit von vlp-TiO₂ gegenüber unmodifiziertem TiO₂ bei dem Abbau von 4-Chlorphenol (als 2,5 x 10⁻⁴ molare wäßrige Lösung) durch das diffuse Tageslicht eines Innenraums. Dargestellt wird die Abnahme des Gesamtgehalts an organischem Kohlenstoff (TOCₜ) in der Lösung im Verhältnis zum Anfangswert (TOC₀). Selbst unter intensitätsschwachem diffusem Tageslicht (7 bis 10 W/m² im Bereich von 400 bis 1200 nm) bewirkt das vlp-TiO₂ innerhalb von sechs Stunden einen 80%igen Abbau. Selbst bei sehr intensitätsschwacher diffuser Tageslichtbeleuchtung (1,6 bis < 1 W/m²) zeigt das vlp-TiO₂ im Gegensatz zu handelsüblichen TiO₂-Photokatalysatoren (Degussa P25, Kemira UV-Titan, Sachtleben Hombikat, Tayca MT-100SA) noch signifikante Photoaktivität. Die Messung der Abbaurate von 2,5 x 10⁻⁴ molarer 4-Chlorphenol-Lösung erfolgte wie oben beschrieben.
a) Lichtintensität: 1,6 W/m²; Dauer: 12 h

| Katalysator | BET-Oberfläche | Abbaurate |
|---|---|---|
| vlp-TiO₂ | 170 m²/g | 16 % |
| P25 | 50 m²/g | 4 % |
| UV-Titan | 20 m²/g | 5 % |
| Hombikat | 240 m²/g | 9 % |
| MT-100SA | 50 m²/g | 5% |

b) Lichtintensität: < 1 W/m²; Dauer: 24 h

| Katalysator | BET-Oberfläche | Abbaurate |
|---|---|---|
| vlp-TiO₂ | 170m²/g | 18 % |
| Hombikat | 240 m²/g | 3 % |

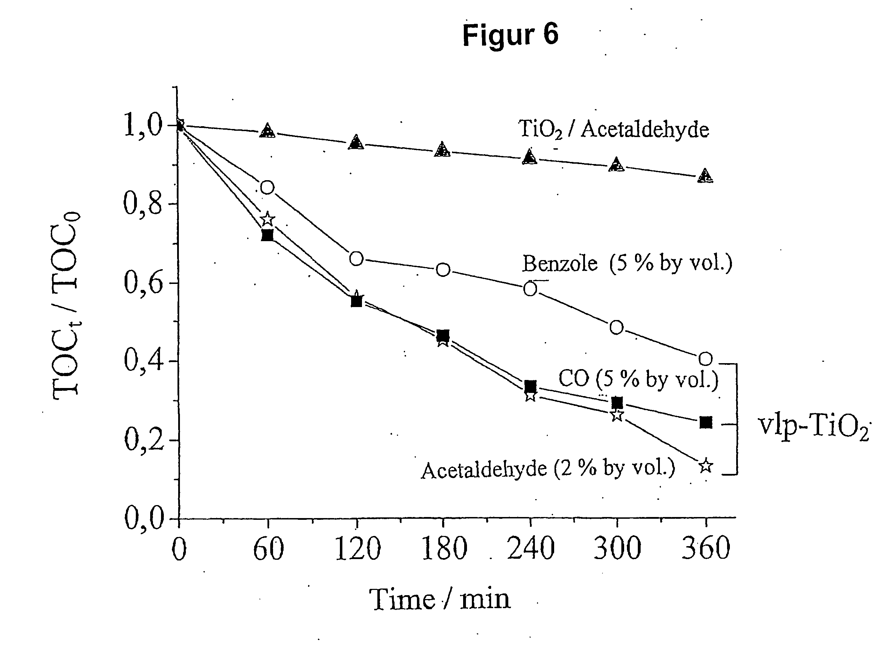

**Figur 6** illustriert die photokatalytische Wirksamkeit von vlp-TiO₂ gegenüber unmodifiziertem TiO₂ bei dem Abbau von Benzol (5 Vol.-%), Acetaldehyd (2 Vol.-%) und Kohlenmonoxid (5 Vol.-%) durch das diffuse Tageslicht eines Innenraums. Als Reaktionsgefäß dient ein 1 Liter-Rundkolben, bestückt mit einem mit 12 mg Titandioxid beschichteten Papier-Rundfilter (d = 15 cm). Dargestellt wird die Abnahme des Gesamtgehalts an organischem Kohlenstoff (TOC₁) in der Atmosphäre im Verhältnis zum Anfangswert (TOC₀). Die Kurven zeigen den Abbau von Benzol, Acetaldehyd bzw. Kohlenmonoxid durch das erfindungsgemäße vlp-TiO₂ sowie den Abbau von Acetaldehyd durch unmodifiziertes Titandioxid.
**Figur 7** zeigt ein Röntgenpulverdiffraktogramm des vlp-TiO₂, das nur Anatas-Reflexe aufweist. Die nach der Scherrer-Methode berechnete Kristallitgröße liegt bei 10 nm.
**Figur 8** zeigt eine mittels hochauflösender Elektronenmikroskopie (HTEM) erstellte Aufnahme von vlp-TiO₂ mit den Gitterlinien der Kristallite. Die Kristallitgröße läßt sich auf eine Größenordnung von 10 nm abschätzen.
**Figur 9** gibt ein Kohlenstoff-Tiefenprofil des vlp-TiO₂ wieder, dargestellt als C/Ti-Verhältnis. Es wurde mittels Ionenbeschuß (Ar⁺) und ESCA-Analyse bestimmt. Die angegebene Beschußzeit von 5 × 10³ Sekunden entspricht einer Tiefe von etwa 5 nm.
**Figur 12** zeigt die Kubelka-Munk-Funktionen erfindungsgemäßer Zusammensetzungen mit unterschiedlichen Bindemitteln im Vergleich zur Kubelka-Munk-Funktion des photokatalytisch wirksamen Mittels.

Ein zur Herstellung im Rahmen der Erfindung einsetzbarer photokatalytisch wirksamer Mittel einsetzbares Verfahren geht von einer Titanverbindung aus, die in Form eines amorphen, teilkristallinen oder kristallinen Titanoxids bzw. wasserhaltigen Titanoxids und/oder eines Titanhydrats und/oder Titanoxyhydrats vorliegt und die im folgenden als Ausgangstitanverbindung bezeichnet wird.

Die Ausgangstitanverbindung kann beispielsweise bei der Titandioxidherstellung entweder nach dem Sulfatverfahren oder nach dem Chloridverfahren erzeugt werden. Titanhydrat bzw. Titanoxyhydrat oder Metatitansäure wird z.B. bei der Hydrolyse von Titanylsulfat oder Titanylchlorid gefällt.

Die Ausgangstitanverbindung kann als feinkörniger Feststoff oder in Suspension mit einem entsprechenden Feststoffanteil von mindestens 15 Gew.-% vorliegen, wobei die spezifische Oberfläche des Feststoffs mindestens 50 m²/g nach BET, bevorzugt etwa 150 bis 350 m²/g nach BET, insbesondere 150 bis 250 m²/g nach BET beträgt.

Für die industrielle Umsetzung des Verfahrens wird aus wirtschaftlichen Gründen als Ausgangstitanverbindung Titanhydrat aus dem Sulfatprozeß bevorzugt. Dieses Titanhydrat wird vorteilhafterweise zuvor durch Neutralisieren und Waschen von anhaftender Schwefelsäure befreit, so daß der Sulfatanteil des Feststoffs nach Trocknung < 1 Gew.-% gerechnet als SO₃ beträgt.

Eine zur Herstellung von im Rahmen der Erfindung einsetzbaren photokatalytisch wirksamen Mitteln mit besonderem Vorteil einsetzbare kohlenstoffhaltige Substanz hat eine Zersetzungstemperatur von höchstens 400°C, besser < 350°C, vorzugsweise < 300°C. Als geeignet haben sich kohlenstoffhaltige Substanzen wie z.B. Holz, Ruß oder Aktivkohle und insbesondere organische Kohlenstoffverbindungen wie Kohlenwasserstoffe mit mindestens einer funktionellen Gruppe erwiesen. Die funktionelle Gruppe kann sein: OH; CHO; COOH; NHₓ; SHₓ; COOR, wobei R ein Alkyl- oder Arylrest ist. Es kommen beispielsweise Bernsteinsäure, Glyzerin oder Ethylenglykol in Frage. Es können auch Zucker oder andere Kohlenhydrate eingesetzt werden, ebenso Organoammoniumhydroxide, insbesondere Tetraalkylammonium. Geeignet sind auch Mischungen der genannten Verbindungen. Vorzugsweise werden wasserlösliche Polyalkohole mit einem Kohlenstoff/Sauerstoff-Verhältnis von etwa 0,7 bis 1,5, bevorzugt von etwa 1 verwendet, insbesondere Pentaerythrit. Die Kohlenstoffverbindung kann als Feststoff, als Lösung oder als Suspension eingesetzt werden.

Die organische Kohlenstoffverbindung sollte eine möglichst hohe Affinität zur Oberfläche der Ausgangstitanverbindung aufweisen, um eine innige Verbindung mit dieser eingehen zu können.

Die Ausgangstitanverbindung wird mit der organischen Kohlenstoffverbindung innig gemischt in der Weise, daß eine Oberflächenbelegung der Ausgangstitanverbindung mit der Kohlenstoffverbindung stattfindet. Die organische Kohlenstoffverbindung kann dabei physisorbiert oder chemisorbiert an der Oberfläche der Ausgangstitanverbindung vorliegen. Die Belegung der Oberfläche der Ausgangstitanverbindung kann durch Lösen der Kohlenstoffverbindung in der Suspension der Ausgangstitanverbindung oder durch Vermischen der Suspension der Kohlenstoffverbindung mit der Suspension der Ausgangstitanverbindung stattfinden. Ein intensives Mischen der Kohlenstoffverbindung mit einer zuvor getrockneten pulverförmigen Ausgangstitanverbindung ist ebenfalls möglich. Im Falle des Einsatzes von Titanhydrat kann die Kohlenstoffverbindung alternativ auch bereits bei der Herstellung des Titanhydrats der zu hydrolysierenden Lösung beigemischt werden. In der fertigen Mischung aus Ausgangstitanverbindung und Kohlenstoffverbindung beträgt die Menge der Kohlenstoffverbindung bezogen auf die Ausgangstitanverbindung (als Feststoff) 1 bis 40 Gew.-%.

Liegt die fertige Mischung als Suspension vor, kann diese vor der weiteren Verarbeitung zu einem pulverförmigen Feststoff getrocknet werden. Dazu bieten sich bekannte Verfahren wie Sprühtrocknung oder Wirbelschichttrocknung an.

Die fertige und gegebenenfalls vorgetrocknete Mischung wird thermisch bei Temperaturen von maximal 400°C behandelt. Die thermische Behandlung wird in oxidierender Atmosphäre bevorzugt in Luft oder in einer Sauerstoff-Luftmischung durchgeführt. Dabei kommt es zur Zersetzung der organischen Kohlenstoffverbindung an der Oberfläche der Ausgangstitanverbindung und zur Freisetzung der H₂O, CO₂ und CO. Obwohl die thermische Behandlung auch im - diskontinuierlichen - Chargenbetrieb beispielsweise in einem handelsüblichen Laborofen stattfinden kann, wird aus wirtschaftlichen Gründen ein kontinuierlicher Prozeß, bei dem ein bestimmtes Temperaturprofil gefahren werden kann, bevorzugt. Als kontinuierliche Verfahren kommen alle Verfahren in Frage, mit denen ein entsprechendes Temperaturprofil und die notwendige Verweilzeit realisierbar sind. Besonders geeignete Aggregate sind indirekt und direkt beheizte Drehrohröfen. Es können auch kontinuierlich betriebene Fließbettreaktoren, Wirbelschichttrockner und beheizte Pflugscharmischer eingesetzt werden. Die drei letztgenannten Aggregate können auch in diskontinuierlicher Fahrweise betrieben werden.

Die thermische Behandlung wird bevorzugt so durchgeführt, daß ein Produkt (vlp-TiO₂) mit einem Kohlenstoffgehalt von 0,05 bis 4,0 Gew.-%, bevorzugt 0,05 bis 2,0 Gew.%, besonders bevorzugt 0,3 bis 1,5 Gew.-% und insbesondere 0,4 bis 0,8 Gew.-% entsteht. Im Verlaufe der thermischen Behandlung findet ein Farbwechsel von weiß auf braun und schließlich auf beige statt. Das Endprodukt zeichnet sich durch eine beige bis leicht gelblich-bräunliche Färbung aus. Es ist charakterisiert dadurch, daß der Kohlenstoff in amorphen und polykristallinen Bereichen der Oberflächenschicht wie auch an der Oberfläche selbst detektierbar ist. Das Produkt ist im sichtbaren Licht photoaktiv.

Nach der thermischen Behandlung wird das Produkt mit bekannten Verfahren deagglomeriert, beispielsweise in einer Stiftmühle, Strahlmühle oder Gegenstrahlmühle. Bei pulverförmigen vorgetrockneten Mischungen führt die thermische Behandlung meist zu agglomeratfreien Produkten, die keiner weiteren Mahlung bedürfen. Die zu erzielende Kornfeinheit hängt von der Korngröße der Ausgangstitanverbindung ab. Die Kornfeinheit oder spezifische Oberfläche des Produkts liegt nur geringfügig niedriger, aber in der gleichen Größenordnung wie die des Edukts. Die angestrebte Kornfeinheit des Photokatalysators hängt von dem Einsatzbereich des Photokatalysators ab. Sie liegt üblicherweise im Bereich wie bei TiO₂-Pigmenten, kann aber auch darunter oder darüber liegen. Die spezifische Oberfläche nach BET liegt bei 100 bis 250 m²/g, vorzugsweise 130 bis 200 m²/g, insbesondere 130 bis 170 m²/g.

Im Rahmen der Erfindung einsetzbare photokatalytisch wirksame Mittel werden anhand der folgenden Beispiele genauer beschrieben.

### Beispiel 1

Eine wäßrige Titanoxyhydrat-Paste (35 Gew.-% Feststoff) hergestellt nach dem Sulfatverfahren wird mit destilliertem Wasser bei Raumtemperatur soweit verdünnt, daß eine rührfähige Suspension entsteht. Der Feststoffanteil liegt bei 20 bis 25 %. Es wird so viel NaOH-Lösung (36 Gew.-%) zugegeben, bis sich ein ph-Wert zwischen 6,0 und 7,0 einstellt. Die Suspension wird anschließend filtriert und mit destilliertem Wasser gewaschen, bis der am getrockneten Rückstand gemessene SO₃-Gehalt unter 1 Gew.-% liegt.

Das auf diese Weise neutralisierte und gewaschene Titanoxyhydrat wird anschließend nochmals zu einer rührfähigen Suspension (25 % Feststoff) mit destilliertem Wasser verdünnt und 12 Gew.-% Bernsteinsäure bezogen auf den Feststoff zugegeben. Die Bernsteinsäure wird der Suspension als Feststoff zugegeben und die Suspension so lange gerührt, bis sich die Bernsteinsäure vollständig gelöst hat. Die Suspension wird zur Verbesserung der Löslichkeit der Bernsteinsäure auf etwa 60°C erwärmt. Die in dieser Weise präparierte Suspension wird unter einem Oberflächenverdampfer (IR-Strahler) unter Rühren soweit getrocknet, bis aus der Suspension eine pastöse Masse entsteht. Die pastöse Masse wird in einem Labortrockenschrank anschließend bei 150°C so lange getrocknet, bis der Feststoffanteil > 98 % beträgt.

300 g der getrockneten Titanoxyhydrat/Bernsteinsäure-Mischung werden fein zerkleinert (z.B. durch Mörsern und Sieben) und das erhaltene Pulver in einer Quarzschale mit Deckel bei 290°C in einen Laborofen gestellt. In Abständen von 1 bis 2 Stunden wird die Quarzschale entnommen und das Pulver nochmals gemischt. Nach 13 bis 15 Stunden im Laborofen hat sich die Farbe des Pulvers von anfänglich gelblich über grau-schwarz nach gelblich-braun geändert. Die thermische Behandlung zum vlp-TiO₂ ist abgeschlossen, wenn der Kohlenstoffgehalt von anfänglich 5 bis 5,5 Gew.-% auf etwa 0,65 bis 0,80 Gew.-% abgenommen hat.

Anschließend wird der Photokatalysator deagglomeriert und auf Kohlenstoffgehalt, optische Eigenschaften, BET-Oberfläche und Photoaktivität analysiert.

### Beispiel 2

Analoges Vorgehen wie in Beispiel 1 mit dem Unterschied, daß 12 Gew.-% Pentaerythrit als Feststoff der Titanoxyhydrat-Suspension zugegeben werden.

### Beispiel 3

Analoges Vorgehen wie in Beispiel 2 mit dem Unterschied, daß 5 Gew.-% Pentaerythrit als Feststoff der Titanoxyhydrat-Suspension zugegeben werden.

### Beispiel 4

Es wird eine Titanoxyhydrat/Pentaerythrit-Suspension unter Einsatz von 5 Gew.-% Pentaerythrit hergestellt wie in Beispiel 1 beschrieben. In Abwandlung von Beispiel 1 wird die thermische Behandlung der so erhaltenen Suspension in einem kontinuierlich betriebenen Drehrohrofen wie folgt durchgeführt:

Der Drehrohrofen wird im Gegenstromverfahren betrieben und über einen Gasbrenner direkt beheizt. Die offene Flamme des Gasbrenners ist durch ein Flammrohr geschützt und verhindert so einen direkten Kontakt mit dem Produkt (vlp-TiO₂). Die beheizte Ofenlänge beträgt 7 m und der lichte Durchmesser 0,3 m. Die Suspension wird im Eintrag des Ofens fein versprüht. Die Aufgabemenge der Suspension beträgt 40 kg/h. Ketteneinbauten im Eintrag des Ofens sorgen für eine gute Verwirbelung und damit für eine rasche Trocknung und anschließende Zerkleinerung des getrockneten Materials. Die Durchlaufzeit durch den kontinuierlich betriebenen Drehrohrofen beträgt 1 Stunde. Die Ofentemperatur im Auslaufbereich wird über die Gasmenge am Brenner auf 260°C geregelt. Am Ofenauslauf fällt das vlp-TiO₂ als feines Pulver mit einer gelblich-braunen Farbe an. Anschließend wird das vlp-TiO₂ in einem Labormixer (Braun, MX 2050) deagglomeriert und auf Kohlenstoffgehalt, optische Eigenschaften, BET-Oberfläche und Photoaktivität analysiert.

### Beispiel 5

Analoges Vorgehen wie in Beispiel 4 mit dem Unterschied, daß die Ofentemperatur im Auslaufbereich über die Gasmenge am Brenner auf 280°C geregelt wird.

### Beispiel 6

Es wird eine Titanoxyhydrat/Pentaerythrit-Suspension unter Einsatz von 5 Gew.-% Pentaerythrit hergestellt wie in Beispiel 1 beschrieben. In Abwandlung von Beispiel 1 wird die Suspension zu einem pulverförmigen Feststoff mit einem Restfeuchtegehalt von 22 % in einem elektrisch beheizten Ofen vorgetrocknet. Die thermische Behandlung des vorgetrockneten pulverförmigen Einsatzmaterials wird in einem kontinuierlich betriebenen indirekt beheizten Drehrohrofen wie folgt durchgeführt:

Der Drehrohrofen wird im Gleichstromverfahren betrieben und elektrisch in drei Zonen beheizt. Die gesamte beheizte Ofenlänge beträgt 2700 mm und der lichte Durchmesser 390 mm. Der pulverförmige Feststoff wird über eine Dosierschnecke in den Eintrag des Ofens gefördert. Ketteneinbauten über die gesamte Länge des Drehrohrs sorgen für eine homogene Verteilung im. Ofen und verhindern Anbackungen an der Ofenwand. Die Aufgabemenge beträgt 25 kg Feststoff pro Stunde. Die Durchlaufzeit durch den kontinuierlich betriebenen Drehrohrofen beträgt 0,5 Stunden. Die Ofentemperatur wird in drei Heizzonen elektrisch geregelt. Die Temperatur jeder der drei Heizzonen ist individuell regelbar. Am Ofenauslauf fällt das vlp-TiO₂ als beige-gefärbtes feines Pulver an. Anschließend wird das vlp-TiO₂ in einem Labormixer (Braun, MX 2050) deagglomeriert und auf Kohlenstoffgehalt, optische Eigenschaften, BET-Oberfläche und Photoaktivität analysiert.

### Vergleichsbeispiel

Ein TiO₂-Pigment (Anatas) mit einer BET-Oberfläche von etwa 10 m²/g (HandelsProdukt Kronos 1000) wird analog Beispiel 2 mit 12 % Pentaerythrit versetzt und thermisch behandelt.

| Beispiel | Organik | Thermische Behandlung | | Analytik des vlp-TiO₂ | | | | | Photoaktivität |
|---|---|---|---|---|---|---|---|---|---|
| | | °C | Zeit (h) | C-Gehalt | PLV-Test | | | BET | Abbau von 4-CP in 120 min. (%) |
| | | | | (%) | L* | b* | a* | m²/g | |
| 1 | Bernsteinsäure | 290 | 13 | 0,79 | 85,4 | 9,85 | 1,63 | 164 | 48 |
| 2 | Pentaerythrit | 290 | 28 | 0.75 | 86.9 | 10.08 | 1,53 | 158 | 50 |
| 3 | Pentaerythrit | 290 | 10 | 0,76 | 83,7 | 10,03 | 1,59 | 140 | 63 |
| 4 | Pentaerythrit | 260* | 1** | 0,92 | 85,1 | 11,7 | 1,2 | 152 | 58 |
| 5 | Pentaerythrit | 280* | 1** | 0,50 | 85,8 | 9,4 | 2,2 | 160 | 68 |
| 6 | Pentaerythrit | 300*** | 0,5** | 0,78 | 83,0 | 11,0 | 2,6 | 167 | 86 |
| Gegen beispiel | Pentaerythrit | 290 | 42 | 0,82 | 74,7 | 9,12 | 2,50 | 11,6 | < 5 |

| | | | | | | | | | |
|---|---|---|---|---|---|---|---|---|---|
| * Maximale Temperatur, gemessen am Austrag des Drehrohrofens ** Durchlaufzeit des Aufgabeguts durch den Drehrohrofen *** Temperatur der drei Heizzonen, gemessen im Bereich der Heizelemente | | | | | | | | | |

In der Tabelle sind Analytik und Photoaktivität des im Rahmen der Erfindung einsetzbaren vlp-TiO₂ zusammengestellt.

Aus Titanhydrat hergestelltes vlp-TiO₂ (Beispiele 1 bis 6) zeigt bei guten optischen Werten (PLV-Test) eine hervorragende photokatalytische Wirksamkeit im sichtbaren Spektralbereich. Die Verwendung von Anatas-Pigment anstelle von Titanhydrat führt zu einem Produkt ohne nennenswerte Photoaktivität (Vergleichsbeispiel).

### Beispiel 7

5 g Titandioxid (Handelsprodukt TRONOX Titanhydrat-0 der Firma Kerr-McGee Pigments GmbH) werden bei Raumtemperatur in 20 ml destilliertem Wasser suspendiert, mit 5 ml Ethylenglykol (Handelsprodukt der Firma FLUKA AG) versetzt und 30 min. im Ultraschallbad (Sonorex Super RK 106 der Firma Bandelin Electronic, Berlin; 35 kHz, 120 W eff. Hf-Leistung) behandelt. Nach magnetischem Rühren über Nacht wird das Lösungsmittel vorzugsweise im Vakuum entfernt, der Rückstand bei 100 bis 200°C, vorzugsweise bei etwa 200°C mindestens 12 Stunden getrocknet, danach innerhalb einer Stunde in einem geschlossenen Gefäß auf 300°C erhitzt und darauf drei weitere Stunden auf dieser Temperatur gehalten. Dabei ist ein Farbwechsel des Pulvers von weiß über dunkelbraun nach beige festzustellen. Längeres Erhitzen führt zu farblosen, inaktiven Pulvern. Die Elementaranalyse des Produkts ergibt 2,58 Gew.-% Kohlenstoff, 0,02 Gew.-% Stickstoff und 0,40 Gew.-% Wasserstoff. Unmodifiziertes TiO₂ enthält 0,07 Gew.-% und 0,0 Gew.-% N und 0,0 Gew.-% H.

### Beispiel 8

Zur Ablösung der oberflächigen Kohlenstoffverbindung werden 5 g vlp-TiO₂ über nach in 100 ml einer 2 M Natronlauge (pH 12) gerührt. Durch Zentrifugieren wird ein braungelber Extrakt und ein kaum gefärbter weißlicher Rückstand erhalten, letzterer wird bei 100°C getrocknet. Das so erhaltene Pulver zeigt beim Abbau von 4-Chlorphenol im sichtbaren Licht keine Aktivität. Wird das Pulver mit dem Extrakt wieder vereinigt und etwas erwärmt, vorzugsweise auf etwa 200°C, besitzt es in der Abbaureaktion die gleiche Aktivität wie das unbehandelte (nicht-gelaugte) vlp-TiO₂.

### Beispiel 9

Zur Beschichtung einer Kunststoff-Folie wird ein nach dem Beispiel 6 hergestelltes Pulver im Ultraschallbad in einer Flüssigkeit wie Methanol oder Ethanol suspendiert und die resultierende Suspension mittels einer Sprühflasche möglichst dünn auf die Folie aufgebracht. Nach anschließender Trocknung bei 343 K kann die Beschichtung bis zum Erreichen der gewünschten Schichtdicke wiederholt werden.

Anstelle der Kunststoff-Folie kann ein anderer Träger wie z.B. Papier (siehe Versuch gem. Figur 6) oder Aluminium (siehe unter Testmethoden h): "dip-coating") verwendet werden.

### Meßmethoden

### a) Bestimmung der optischen Werte (PLV-Test)

Die Methode dient zur Ermittlung der optischen Werte Helligkeit L*, Ton a* und Ton b* des vlp-TiO₂. Aus dem zu testenden vlp-TiO₂ wird unter definierten Bedingungen mit einer hydraulischen Kleinpresse der Firma MATRA, Frankfurt ein Pulverpreßling hergestellt. Mit dem HUNTERLAB Tristimulus Colorimeter werden anschließend an dem Pulverpreßling die Remissionswerte bestimmt.

Das vlp-TiO₂ wird vor der Herstellung des Preßlings gemahlen. 100 g des erhaltenen vlp-TiO₂ wird dazu in einen handelsüblichen Mixer (Hersteller: Braun, Modell: MX 2050) gegeben und 12 mal 5 sec. gemahlen. Zwischen jedem Mahlschritt wird der Mixer geöffnet und das Pulver nochmals durchgemischt. Auf eine Bodenplatte mit kreisförmiger Vertiefung legt man ein auf beiden Seiten mattes weißes Blatt Papier und drückt mit der Presse einen Metallring (Höhe 4 cm, Durchmesser 2,4 cm) in die Vertiefung. Etwa 25 g des gemahlenen vlp-TiO₂ werden unter leichtem Schütteln und Klopfen in den Metallring gegeben. Mit einem Druck von 2 - 3 kN wird das Pulver zusammengepreßt. Der Preßvorgang wird ein zweites Mal bis zum Erreichen des angestrebten Betriebsdruckes von 15 kN wiederholt. Durch vorsichtiges Drehen und Ziehen des Metallrings trennt man diesen von der Bodenplatte. Das Papier zwischen Bodenplatte und Ring wird entfernt. Im Ring befindet sich nun der Preßling, der für den Meßvorgang am HUNTERLAB Colorimeter verwendet wird. Die Meßwerte L*, a*, b* werden am Colorimeter direkt abgelesen.

### b) Bestimmung der Photoaktivität (Schadstoffabbau)

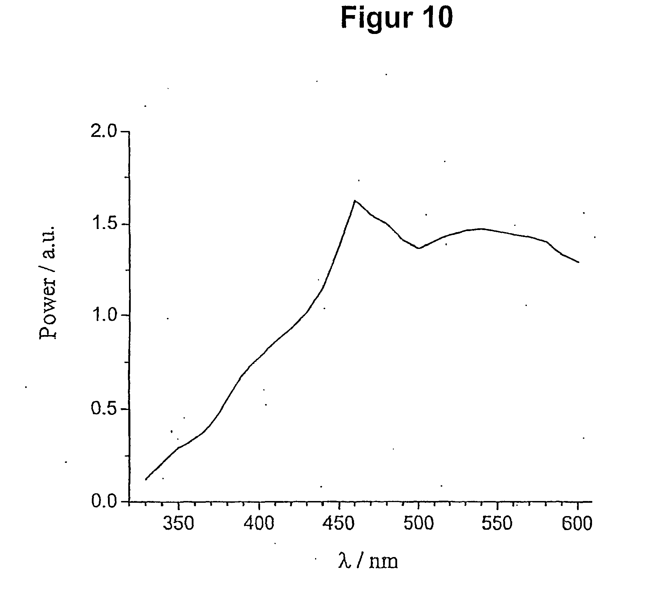

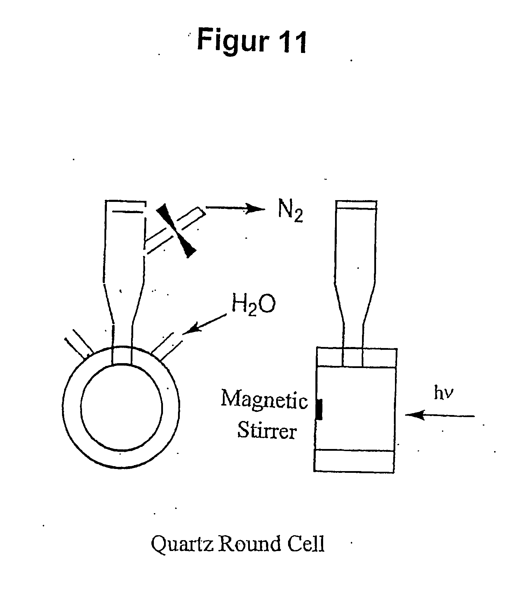

In artifiziellem sichtbaren Licht:
15 mg des vlp-TiO₂ werden in 15 ml einer 2,5 x 10⁻⁴ molaren Lösung von 4-Chlorphenol 10 Minuten im Ultraschallbad dispergiert und anschließend in einer wassergekühlten Rundküvette auf einer optischen Bank belichtet. Die Belichtungen zur Bestimmung der Photoaktivität erfolgen mit einer in einem fokussierenden Lampengehäuse (AMKO Mod. A1020, Brennweite 30 cm) installierten Osram XBO 150 W Xenon - Kurzbogenlampe. Das Spektrum dieser Lampe ist in Figur 10 abgebildet. Die Reaktionen werden in einer 15 ml fassenden, wassergekühlten Rundküvette mit einem Innendurchmesser von 30 mm und einer Schichtdicke von 20 mm durchgeführt. Die Reaktionssuspension kann mit einem seitlich angebrachten Rührmotor und Rührmagneten gerührt werden. Die Rundküvette ist in Figur 11 abgebildet. Die Küvette wird im Brennpunkt der Lampe fixiert. Das Licht wird so fokussiert, daß nur der Reaktionsraum der Küvette bestrahlt wird. Alle Bestandteile werden auf einer optischen Bank fest montiert. Zur Eliminierung von UV-Licht wird in den Strahlengang ein Kantfilter (Fa. Schott) eingebracht, dessen Durchlässigkeit bei λ ≥ 455 nm liegt. Zur Verhinderung einer möglichen Aufheizung des Reaktionsraums durch die Belichtung wird zusätzlich ein IR-Filter in den Strahlengang montiert. Dabei handelt es sich um einen mit Wasser gefüllten Zylinder (Durchmesser 6 cm, Länge 10 cm).

Die Abnahme der Konzentration an 4-Chlorphenol wird mittels UV-Spektroskopie (λ = 224 nm) oder im Falle des Abbaus (Oxidation) über Messung des Gesamtgehalts an organischem Kohlenstoff (TOC-Wert) verfolgt.

Im diffusen Tageslicht eines Innenraums:
50 mg des vlp-TiO₂werden in 50 ml einer 2,5 x 10⁻⁴ molaren Lösung von 4-Chlorphenol 10 Minuten im Ultraschallbald dispergiert und anschließend in einem Erlenmeyerkolben (100 ml) unter Rühren dem Tageslicht in einem Innenraum ausgesetzt.

Abbau von Acetaldehydgas, Benzoldampf und Kohlenmonoxid:
In einem mit luftgesättigtem Acetaldehydgas (2 Vol.-%) oder mit Benzoldampf (5 Vol.-%) oder mit Kohlenmonoxid gefüllten Rundkolben (1 I) werden zwei mit vlp-TiO₂ beidseitig beschichtete Rundfilter (Papier, d = 15 cm, 12 mg Katalysator pro Filter) eingebracht. Anschließend wird der Kolben im Laboratorium dem Tageslicht ausgesetzt und die Abnahme der Schadstoffe und die Bildung von Kohlendioxid mittels IR-Spektroskopie verfolgt.

### c) Bestimmung des Kohlenstoffgehalts

Die Bestimmung erfolgt als gesamter organischer Kohlenstoffgehalt (TOC) mit dem Kohlenstoffanalysator LECO C-200. Die Meßmethode basiert auf der Verbrennung der im TiO₂ enthaltenen organischen Substanz im Induktionsofen unter Sauerstoffgas und der anschließenden Bestimmung des sich bildenden Kohlendioxids mittels IR-Detektion. Die Einwaage TiO₂ beträgt ca. 0,4 g.

### d) Bestimmung der spezifischen Oberfläche nach BET (Brunauer-Emmett-Teller)

Die BET-Oberfläche wird mit einem Tristar 3000 der Fa. Mictromeritics nach dem statisch volumetrischen Prinzip gemessen.

### e) XPS-Messungen

Zur Messung der Bindungsenergien wurde das Gerät Phi 5600 ESCA Spektrometer (pass energy of 23,50 eV; Al standard; 300,0 W; 45,0°) verwendet.

### f) ESR-Messungen

Zur Messung der Elektronenresonanzspektren wurde ein Bruker Elexys 580 Spektrometer X-band (9,5 GHz) verwendet. Die Probe wurde bis 10⁻⁵ Torr evakuiert, mit Helium bis zu einem Druck von 10⁻² Torr gefüllt und anschließend abgeschmolzen. Die Messung erfolgte unter folgenden Bedingungen:
Magnetfeld mit 100 Hz moduliert. RF power; 0,0002 - 1 mW. Field: 3340 - 3500 G.
Sweep Width: 100 - 500 G. Conversion Time: 81,92 ms. Time constant: 40,96 ms.
Modifizierte Amplitude: 0,2 - 13 G Temperatur: 5 K. Der g-Wert wird mittels einer Hall-Sonde bestimmt.

### g) Messung der diffusen Reflektionsspektren (Kubelka-Munk-Funktion)

Die diffusen Reflektionsspektren der Pulver wurden mit einem Shimadzu UV-2401 PC UV/Vis-Spektrometer gemessen, welches mit einer Ulbrichtkugel ausgestattet war. Als Weiß-Standard diente Bariumsulfat, mit dem die Pulver vor der Messung in einem Mörser verrieben wurden. Die Kubelka-Munk-Funktion ist proportional zur Absorbanz.

### h) Superhydrophile Eigenschaften

Zur Messung des Kontaktwinkels von Wasser wurde jeweils vlp-TiO₂ und unmodifiziertes TiO₂ in destilliertem Wasser suspendiert, durch "dip coating" auf ein 5 x 5 cm großes Aluminiumplättchen aufgebracht und 1 Stunde bei 400°C calciniert. Nach Aufbewahren im Tageslicht wurde für unmodifiziertes Titandioxid ein Kontaktwinkel von 21° gemessen, für vlp-TiO₂ dagegen nur 8°. Der Kontaktwinkel für das unbeschichtete Aluminiumplättchen betrug 91 °.

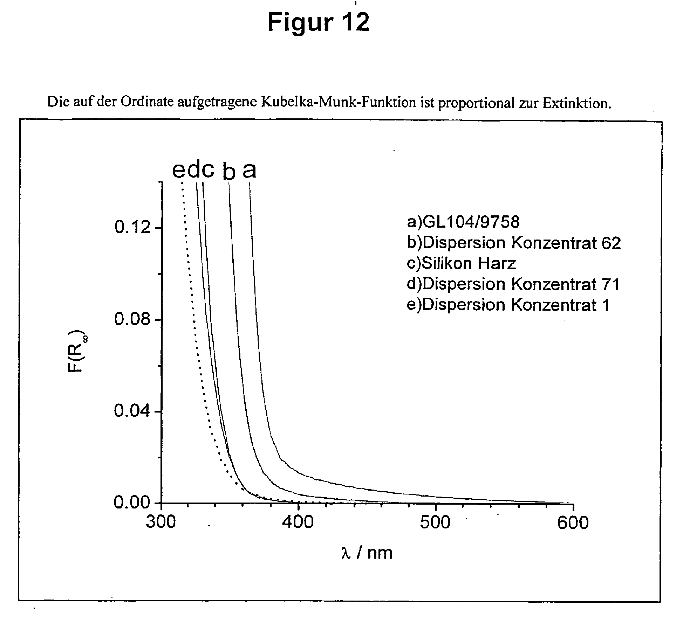

In Figur 12 ist die Kubelka-Munk-Funktion erfindungsgemäßer Zusammensetzungen im Vergleich zur Kubelka-Munk-Funktion des zur Herstellung dieser Zusammensetzungen eingesetzten photokatalytisch wirksamen Mittels angegeben. Dabei ist bei a) die Kubelka-Munk-Funktion des photokatalytisch wirksamen Mittels gezeigt. Bei b) ist die Kubelka-Munk-Funktion einer Zusammensetzung mit Styrolacrylat (Alberdingk AS 6002) als Bindemittel angegeben. Bei c) ist die Kubelka-Munk-Funktion einer erfindungsgemäßen Zusammensetzung mit einem Silikonharz als Bindemittel angegeben. Bei d) ist die Kubelka-Munk-Funktion einer erfindungsgemäßen Zusammensetzung mit Vinylacetat-Ethylen (Mowilith LDM 1871) als Bindemittel angegeben. Bei e) ist die Kubelka-Munk-Funktion einer Zusammensetzung mit einem Copolymer eines Styrol-/Butyl-Acrylats (Dilexo AS 151) als Bindemittel angegeben.

In der erfindungsgemäßen Zusammensetzung beträgt der Bindemittelanteil 2 bis 60 Gew.-%, vorzugsweise 3 bis 50 Gew.-%, insbesondere 9 bis 35 Gew.-%. Der Anteil des photokatalytisch wirksamen Mittels in der Zusammensetzung beträgt zweckmäßigerweise 2 bis 40 Gew.-%, vorzugsweise 2 bis 20 Gew.-%, besonders bevorzugt 4 bis 15 Gew.-%, insbesondere 5 bis 10 Gew.-%. Es hat sich gezeigt, daß der angestrebte photokatalytische Effekt bereits in besonders zufriedenstellendem Umfang erreichbar ist, wenn der Anteil des photokatalytisch wirksamen Mittels 5 Gew.-% oder mehr beträgt. Ferner hat es sich gezeigt, daß die Auswirkungen des photokatalytisch wirksamen Mittels auf die übrigen Eigenschaften erfindungsgemäßer Zusammensetzungen fast vernachlässigbar bleiben, wenn der Anteil des photokatalytisch wirksamen Mittels 10 Gew.-% oder weniger beträgt.

## Patentansprüche

1. Zusammensetzung zum Beschichten von Wänden, Fassaden od. dgl. mit mindestens einem Bindemittel mit einem photokatalytisch wirksamen Mittel mit einer signifikanten Lichtabsorption bei mindestens einer Absorptionswellenlänge im Bereich zwischen 380 nm und 500 nm, **dadurch gekennzeichnet, daß** das photokatalytisch wirksame Mittel mit Kohlenstoff und/oder Schwefel versetztes, insbesondere dotiertes TiO₂ aufweist.

2. Zusammensetzung nach Anspruch 1, **dadurch gekennzeichnet, daß** das Verhältnis der Absorbanz (Kubelka-Munk-Funktion F (R_{∞})) des photokatalytisch wirksamen Mittels zur Absorbanz (Kubelka-Munk-Funktion F (R_{∞})) des Bindemittels bei mindestens einer Absorptionswellenlänge im Bereich zwischen 380 nm und 500 nm größer als 6,25 × 10⁻³, vorzugsweise größer als 1 × 10⁻² ist.

3. Zusammensetzung nach Anspruch 1 oder 2, **gekennzeichnet durch** ein Bindemittel, das bei mindestens einer Absorptionswellenlänge im Bereich zwischen 380 und 500 nm, insbesondere im Bereich zwischen 400 und 450 nm, eine Absorbanz (Kubelka-Munk-Funktion F(R_{∞})) von weniger als 0,8, insbesondere weniger als 0,5 aufweist, wenn das photokatalytisch wirksame Mittel unter gleichen Meßbedingungen bei der Absorptionswellenlänge eine Absorbanz (Kubelka-Munk-Funktion F (R_{∞})) von mehr als 0,005, insbesondere mehr als 0,01, besonders bevorzugt 0,02 oder mehr aufweist.

4. Zusammensetzung zum Beschichten von Wänden, Fassaden od. dgl. nach Anspruch 1, mit mindestens einem Bindemittel und mindestens einem photokatalytisch wirksamen Mittel, **dadurch gekennzeichnet, daß** das Bindemittel mindestens einen organischen Bestandteil und/oder mindestens einen anorganischen Bestandteil aufweist.

5. Zusammensetzung nach einem der vorhergehenden Ansprüche, **dadurch gekennzeichnet, daß** das Titandioxid im wesentlichen in einer Anatas-Phase vorliegt.

6. Zusammensetzung nach einem der vorhergehenden Ansprüche, **dadurch gekennzeichnet, daß** der Kohlenstoffgehalt des photokatalytisch wirksamen Mittels 0,05 bis 4 Gew.-%, bevorzugt 0,05 bis 2 Gew.-%, besonders bevorzugt 0,4 bis 1,5 Gew.-% beträgt.

7. Zusammensetzung nach einem der vorhergehenden Ansprüche, **dadurch gekennzeichnet, daß** das photokatalytisch wirksame Mittel zumindest teilweise hergestellt ist durch Vermischen einer vorzugsweise in einem Lösungsmittel, wie etwa Wasser, gelösten titanhaltigen Verbindung mit einer organischen Kohlenstoffverbindung und thermisches Behandeln dieser Mischung bei einer Temperatur von 500°C oder weniger, vorzugsweise 400°C oder weniger, besonders bevorzugt 300°C oder weniger, und mehr als 150°C, insbesondere 200°C oder mehr.

8. Zusammensetzung nach einem der vorhergehenden Ansprüche, **dadurch gekennzeichnet, daß** das photokatalytisch wirksame Mittel eine starke Absorptionsbande bei einer Bindungsenergie von 285,6 eV im Röntgen-Photoelektronenspektrum (XPS), bezogen auf die O1s-Bande bei 530 eV, aufweist.

9. Zusammensetzung nach einem der vorhergehenden Ansprüche, **gekennzeichnet durch** mindestens ein Dispergiermittel, mindestens ein Verdickungsmittel, mindestens einen Entschäumer, mindestens ein Pigment, mindestens einen Füllstoff, mindestens ein Hydrophobierungsmittel und/oder mindestens ein Mikrobiozid.

10. Zusammensetzung nach einem der vorhergehenden Ansprüche, **gekennzeichnet durch** eine oberkritische Zusammensetzung, bei der der Feststoffanteil so auf den flüssigen Anteil abgestimmt ist, daß keine vollständige Benetzung der Feststoffe erfolgt.

11. Zusammensetzung nach einem der vorhergehenden Ansprüche, **gekennzeichnet durch** mindestens ein Absorptionsmittel, wie etwa Aktivkohle, Kieselsäure, Mikrosilika, Silikagele, Zeolithe, Bentonite, Diatomenerde, geschäumtes Glas oder dgl.

12. Zusammensetzung nach einem der vorhergehenden Ansprüche, **dadurch gekennzeichnet, daß** das photokatalytisch wirksame Mittel ein bei einer Temperatur von 5 K gemessenes Elektronenspinresonanz-Spektrum (ESR) aufweist, welches im Bereich des g-Werts von 1,97 bis 2,05 lediglich ein signifikantes Signal erkennen läßt.

13. Zusammensetzung nach einem der vorhergehenden Ansprüche, **dadurch gekennzeichnet, daß** das photokatalytisch wirksame Mittel mindestens ein Signal im ESR-Spektrum bei einem g-Wert von 2,002 bis 2,004 aufweist.

14. Zusammensetzung nach einem der vorhergehenden Ansprüche, **gekennzeichnet dadurch, daß** die der Absorbanz proportionale Kubelka-Munk-Funktion F (R_{∞}) für das photokatalytisch wirksame Mittel bei 500 nm etwa 50 % und bei 600 nm etwa 20 % des Wertes bei 400 nm beträgt.

15. Zusammensetzung nach einem der vorhergehenden Ansprüche, **gekennzeichnet durch** eine Photoaktivität von mindestens 20 %, bevorzugt mindestens 40 %, und insbesondere mindestens 50 %.

16. Zusammensetzung nach einem der vorhergehenden Ansprüche, **dadurch gekennzeichnet, daß** der Kohlenstoffgehalt des photokatalytisch wirksamen Mittels im Bereich von 0,4 bis 0,8 Gew.-% liegt.

17. Zusammensetzung nach einem der vorhergehenden Ansprüche, **dadurch gekennzeichnet, daß** der Kohlenstoff des photokatalytisch wirksamen Mittels überwiegend, insbesondere nur in einer Oberflächenschicht der Titandioxid-Partikel, eingelagert ist.

18. Zusammensetzung nach einem der vorhergehenden Ansprüche, **dadurch gekennzeichnet, daß** das photokatalytisch wirksame Mittel weder im Röntgen-Photoelektronenspektrum (XPS) noch im Infrarotspektrum Carbonatbanden zeigt.

19. Zusammensetzung nach einem der vorhergehenden Ansprüche, **dadurch gekennzeichnet, daß** die spezifische Oberfläche des photokatalytisch wirksamen Mittels nach BET 100 bis 250 m²/g, bevorzugt 130 bis 200 m²/g, insbesondere 130 bis 170 m²/g, beträgt.

20. Verfahren zum Herstellen einer Zusammensetzung nach einem der vorhergehenden Ansprüche, **dadurch gekennzeichnet, daß** in einem ersten Schritt ein Zwischenprodukt durch Dispergieren des photokatalytisch wirksamen Mittels in einem anorganischen Bindemittel erzeugt und dieses Zwischenprodukt in einem zweiten Schritt mit einem organischen Bindemittel vermischt wird.

21. Verwendung einer Zusammensetzung nach einem der Ansprüche 1 bis 19 in Farben, Putzen, Lacken und/oder Lasuren zur Applikation auf Mauerwerk, Putzoberflächen, Anstrichen, Tapeten, Holz-, Metall-, Glas- und/oder Keramikoberflächen und/oder Wärmedämmverbundsystemen und/oder vorgehängten Fassadenelementen im Innen- und/oder Außenbereich.

## Claims

1. Composition for coating walls, facades or suchlike with at least one binding agent with a photo catalytically acting agent with a significant light absorption on at least one absorption wavelength within a range of 380 nm to 500 nm, **characterised in that** the photo catalytically acting agent comprises TiO₂ mixed with carbon and/or sulphur, in particular doped.

2. Composition according to Claim 1, **characterised in that** the ratio of absorbance (Kubelka-Munk function F (R_{abs})) of the photo catalytically acting agent to the absorbance (Kubelka-Munk function F (R_{abs})) of the binding agent on at least one absorption wavelength within a range of 380 nm and 500 nm is greater than 6.25 x 10⁻³, preferably greater than 1 x 10⁻².

3. Composition according to Claim 1 or 2, **characterised by** a binding agent comprising an absorbance (Kubelka-Munk function F (R_{abs})) of less than 0.8, in particular of less than 0.5 on at least one absorption wavelength within a range of 380 nm to 500 nm, in particular within a range of 400 to 450 nm if the photo catalytically acting agent comprises an absorbance (Kubelka-Munk function F (R_{abs} )) of more than 0,005, in particular of more than 0.01, particularly preferably of more than 0.02 or more under identical measuring conditions on the absorption wavelength.

4. Composition for coating walls, facades and suchlike according to Claim 1, with at least one binding agent and at least one photo catalytically acting agent, **characterised in that** the binding agent comprises at least one organic component and/or at least one anorganic component.

5. Composition according to one of the preceding Claims, **characterised in that** the titanium dioxide is substantially present in an anatas phase.

6. Composition according to one of the preceding Claims, **characterised in that** the carbon content of the photo catalytically acting agent is 0.05 to 4 wt. % , preferably 0.05 to 2 wt. %, particularly preferably 0.4 to 1.5 wt. %.

7. Composition according to one of the preceding Claims, **characterised in that** the photo catalytically acting agent is produced at least in part by mixing with a titanium containing compound, preferably dissolved in a solvent such as for example water with an organic carbon compound, and by thermally treating this mixture at a temperature of 500°C or less, preferably 400°C or less, particularly preferably 300° C or less, and of more than 150°C, preferably 200°C or more.

8. Composition according to one of the preceding Claims, **characterised in that** the photo catalytically acting agent comprises a strong absorption band at a binding energy of 285.6 eV within the X-ray photoelectron spectrum (XPS) related to the O1s band at 530 eV.

9. Composition according to one of the preceding Claims, **characterised by** at least one dispersing agent, at least one thickening agent, at least one defoamer, at least one pigment, at least one filler, at least one hydrophobing agent and/or at least one microbiocide.

10. Composition according to one of the preceding Claims, **characterised by** a hypercritical composition in which the solids content is adjusted to suit the liquid content in such a way that a complete wetting of the solids will not occur.

11. Composition according to one of the preceding Claims, **characterised by** at least one absorption agent such as active carbon, silicic acid, micro-silica, silica gels, zeolites, bentonites, diatomaceous earth, foamed glass or suchlike.

12. Composition according to one of the preceding Claims, **characterised in that** the photo catalytically acting agent comprises an electron spin resonance spectrum (ESR) measured at a temperature of 5k that allows detection of only one significant signal within the range of the g value of 1.97 to 2.05.

13. Composition according to one of the preceding Claims, **characterised in that** the photo catalytically acting agent comprises at least one signal within the ESR spectrum at a g value of 2.002 to 2.004.

14. Composition according to one of the preceding Claims, **characterised in that** the Kubelka-Munk function F (R_{abs}) for the photo catalytically acting agent proportional to the absorbance is approximately 50 % of the value at 500 nm and at 600 nm, and approximately 20 % at 400 nm.

15. Composition according to one of the preceding Claims, **characterised by** a photo activity of at least 20 %, preferably at least 40 %, and particularly preferably at least 50 %.

16. Composition according to one of the preceding Claims, **characterised in that** the carbon content of the photo catalytically acting agent lies within a range of 0.4 to 0.8 wt. %.

17. Composition according to one of the preceding Claims, **characterised in that** the carbon of the photo catalytically acting agent is embedded primarily and in particular only in the surface layer of the titanium dioxide particles.

18. Composition according to one of the preceding Claims, **characterised in that** the photo catalytically acting agent displays carbonate bands neither in the X-ray photoelectron spectrum (XPS) nor in the infrared spectrum.

19. Composition according to one of the preceding Claims, **characterised in that** the specific surface of the photo catalytically acting agent is 100 to 250 m²/g, preferably 130 to 200 m²/g, in particular 130 to 170 m²/g according to BET.

20. Method for producing a composition according to one of the preceding Claims, **characterised in that** an interim product is produced during a first step by dispersing the photo catalytically acting agent in an anorganic binding agent, and **in that** this interim product is mixed with an organic binding agent during a second step.

21. Use of a composition according to one of the Claims 1 to 19 in paints, plaster, lacquers and/or glazes for application onto masonry, plaster surfaces, paint finishes, wallpaper, wood, metal, glass and/or ceramic surfaces and/or heat insulation compound systems and/or interior or exterior curtain facades.

## Revendications

1. Composition pour revêtement de murs, façades et similaires, comprenant au moins un liant associé avec un agent à effet photocatalytique, qui absorbe significativement la lumière à au moins une longueur d'onde d'absorption dans le domaine allant de 380 nm à 500 nm, **caractérisée en ce que** l'agent à effet photocatalytique comporte du dioxyde de titane additionné de carbone et/ou de soufre, en particulier dopé avec.

2. Composition conforme à la revendication 1, **caractérisée en ce que** le rapport de l'absorbance (fonction de Kubelka-Munk F(R_{∞})) de l'agent à effet photocatalytique à l'absorbance (fonction de Kubelka-Munk F(R_{∞})) du liant, à au moins une longueur d'onde d'absorption dans le domaine allant de 380 nm à 500 nm, est supérieur à 6,25.10⁻³, et de préférence supérieur à 1.10⁻².

3. Composition conforme à la revendication 1 ou 2, **caractérisée en ce qu'**elle comprend un liant qui présente, à au moins une longueur d'onde d'absorption dans le domaine allant de 380 nm à 500 nm, en particulier dans le domaine allant de 400 nm à 450 nm, une absorbance (fonction de Kubelka-Munk F(R_{∞})) inférieure à 0,8, en particulier inférieure à 0,5, alors que l'agent à effet photocatalytique présente, dans les mêmes conditions de mesure et à la longueur d'onde d'absorption, une absorbance (fonction de Kubelka-Munk F(R_{∞})) supérieure à 0,005, en particulier supérieure à 0,01, et de préférence d'au moins 0,02.

4. Composition pour revêtement de murs, façades et similaires, conforme à la revendication 1, comprenant au moins un liant et au moins un agent à effet photocatalytique, **caractérisée en ce que** le liant comporte au moins un constituant organique et/ou au moins un constituant inorganique.

5. Composition conforme à l'une des revendications précédentes, **caractérisée en ce que** le dioxyde de titane se présente essentiellement sous la forme anatase.

6. Composition conforme à l'une des revendications précédentes, **caractérisée en ce que** la teneur en carbone de l'agent à effet photocatalytique vaut de 0,05 à 4 % en poids, de préférence de 0,05 à 2 % en poids, et en particulier de 0,4 à 1,5 % en poids.

7. Composition conforme à l'une des revendications précédentes, **caractérisée en ce qu'**on a préparé l'agent à effet photocatalytique, au moins en partie, en mélangeant un composé contenant du titane, de préférence dissous dans un solvant comme de l'eau, avec un composé carboné organique, et en faisant subir à ce mélange un traitement thermique à une température d'au plus 500 °C, de préférence d'au plus 400 °C et en particulier d'au plus 300 °C, mais supérieure à 150 °C, et en particulier d'au moins 200 °C.

8. Composition conforme à l'une des revendications précédentes, **caractérisée en ce que** l'agent à effet photocatalytique présente une bande d'absorption intense, pour une énergie de liaison de 285,6 eV dans le spectre XPS (spectre de photoélectrons X), par rapport à la bande O1s à 530 eV.

9. Composition conforme à l'une des revendications précédentes, **caractérisée en ce qu'**elle comprend au moins un dispersant, au moins un épaississant, au moins un démoussant, au moins un pigment, au moins une charge, au moins un agent d'hydrophobisation et/ou au moins un agent microbicide.

10. Composition conforme à l'une des revendications précédentes, **caractérisée en ce qu'**il s'agit d'une composition supercritique dans laquelle la proportion de solides est accordée à la proportion de liquide de telle manière que les solides n'en sont pas complètement imprégnés.

11. Composition conforme à l'une des revendications précédentes, **caractérisée en ce qu'**elle comprend au moins un agent absorbant, tel que charbon actif, acide silicique, microsilice, gel de silice, zéolithe, bentonite, terre de diatomées, verre mousse ou similaire.

12. Composition conforme à l'une des revendications précédentes, **caractérisée en ce que** l'agent à effet photocatalytique présente un spectre ESR (résonance de spin électronique), à la température de 5 K, sur lequel on ne peut détecter qu'un seul signal significatif dans le domaine de valeurs du facteur g allant de 1,97 à 2,05.

13. Composition conforme à l'une des revendications précédentes, **caractérisée en ce que** l'agent à effet photocatalytique présente, dans son spectre ESR, au moins un signal pour un facteur g valant de 2,002 à 2,004.

14. Composition conforme à l'une des revendications précédentes, **caractérisée en ce que**, pour l'agent à effet photocatalytique, la fonction de Kubelka-Munk F(R_{∞}) proportionnelle à l'absorbance vaut, à 500 nm, environ 50 %, et à 600 nm, environ 20 %, de sa valeur à 400 nm.

15. Composition conforme à l'une des revendications précédentes, **caractérisée en ce qu'**elle présente une photoactivité d'au moins 20 %, de préférence d'au moins 40 %, et en particulier d'au moins 50 %.

16. Composition conforme à l'une des revendications précédentes, **caractérisée en ce que** l'agent à effet photocatalytique présente une teneur en carbone de 0,4 à 0,8 % en poids.

17. Composition conforme à l'une des revendications précédentes, **caractérisée en ce que** le carbone de l'agent à effet photocatalytique se trouve incorporé principalement dans une couche superficielle des particules de dioxyde de titane, et en particulier seulement là.

18. Composition conforme à l'une des revendications précédentes, **caractérisée en ce que** l'agent à effet photocatalytique ne donne pas de bandes d'une espèce carbonate, ni dans son spectre XPS (spectre de photoélectrons X), ni dans son spectre d'absorption dans l'infra-rouge.

19. Composition conforme à l'une des revendications précédentes, **caractérisée en ce que** l'agent à effet photocatalytique présente une aire spécifique, mesurée selon la méthode BET, de 100 à 250 m²/g, de préférence de 130 à 200 m²/g, et en particulier de 130 à 170 m²/g.

20. Procédé de préparation d'une composition conforme à l'une des revendications précédentes, **caractérisé en ce que**, dans une première étape, on obtient un produit intermédiaire en dispersant l'agent à effet photocatalytique dans un liant inorganique, et dans une deuxième étape, on mélange ce produit intermédiaire avec un liant organique.

21. Utilisation d'une composition conforme à l'une des revendications 1 à 19 dans des peintures, des enduits, des vernis et/ou des lasures conçus pour être appliqués sur des ouvrages de maçonnerie, des surfaces enduites, des couches de peinture, des papiers-peints, des surfaces en bois, en métal, en verre et/ou en céramique, et/ou des systèmes composites d'isolation thermique et/ou des éléments de façade rideau en intérieur et/ou en extérieur.
